# EUROPEAN PATENT APPLICATION

(11) **EP 4 561 155 A1**
(43) Date of publication of application: **28.05.2025**
(21) Application number: 22951630.7
(22) Date of filing: 22.07.2022
(51) Int. Cl.: H04W 24/08

(54) **MEASUREMENT ASSOCIATION METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/107533
(87) International publication number: WO 2024/016361

(57) **Abstract**

Disclosed in embodiments of the present disclosure are a measurement association method and apparatus, a device, and a storage medium, which can be applied to a communication system. When executed by a first node device, the method comprises: indicating measurement alignment request information to a second node device, wherein the measurement alignment request information is used for requesting alignment of a first measurement on the second node device with a second measurement and/or requesting alignment of a first measurement on the first node device with a second measurement related to the second node device. By implementing the method of the present disclosure, the alignment of the first measurement on the second node device with the second measurement on a terminal device and/or the alignment of the first measurement on the first node device with the second measurement related to the second node device can be achieved, thereby effectively improving the association effect between the first measurement and the second measurement.

## Description

### TECHNICAL FIELD

The disclosure relates to the field of communication technology, more particularly, to a measurement association method, apparatus, device, and storage medium.

### BACKGROUND

In a communication network, in order to facilitate network optimization and problem analysis, application layer measurement (for example, Quality of Experience (QoE)) and access layer measurement (for example, Minimization of Drive Tests (MDT)) are usually required. After such measurements, a trace collection entity (TCE) or a measurement collection entity (MCE) performs association analysis on the results of different measurements to analyze and locate network problems.

In the related art, in a dual connectivity (DC) scenario, the access layer measurement may include access layer measurement on a terminal, a master node (MN) and/or a secondary node (SN), and an application layer measurement report can be sent to the MCE via the MN and/or SN.

In this way, the access layer measurement on the secondary node (SN) or the master node (MN) cannot be effectively associated with the application layer measurement on the terminal.

### SUMMARY

Embodiments of the present disclosure provide a measurement association method, apparatus and device, a chip system, a storage medium, a computer program and a computer program product, which can be performed in the field of communication technology, and can align a first measurement on a second node device with a second measurement on the terminal, and align a first measurement on a first node device with a second measurement associated with a second node, thereby effectively improving the association effect between the first measurement and the second measurement.

A first aspect of embodiments of the disclosure provides a measurement association method performed by a first node device. The method includes: indicating measurement alignment request information to a second node device, in which the measurement alignment request information is configured to request to align a first measurement on the second node device with a second measurement, and/or to request to align a first measurement on the first node device with a second measurement associated with the second node device.

In an implementation, the measurement alignment request information includes at least one of:
alignment indication information; or
a first next generation radio access network (NG-RAN) trace identity (ID).

In an implementation, the method further includes:
obtaining measurement alignment response information indicated by the second node device.

In an implementation, the measurement alignment response information includes at least one of:
a second NG-RAN trace ID;
a requirement of application layer session status information; or
a report mode of application layer session status information.

In an implementation, the method further includes:
indicating report configuration information of an application layer session status to a user equipment (UE) based on the measurement alignment response information, in which the report configuration information is configured to instruct the UE to send the session status information to the first node device and/or the second node device, and/or indicate a mode of sending the session status information.

In an implementation, the method further includes:
receiving measurement result information of the second measurement sent by the UE; and
sending the measurement result information to a measurement collection entity (MCE) and/or a trace collection entity (TCE), in which the measurement result information includes the second NG-RAN trace ID.

In an implementation, indicating the measurement alignment request information to the second node device includes:
sending a first message to the second node device, in which the first message includes the measurement alignment request information;
in which the first message includes at least one of:
   a UE associated signaling message; or
   a non-UE associated signaling message.

In an implementation, the UE associated signaling message includes at least one of:
a secondary node (S-NODE) addition request message;
an S-NODE modification request message;
an S-NODE modification acknowledge message;
a UE associated Xn application proposal (XnAP) message;
a UE context establishment request message;
a UE context modification request message;
a UE context modification acknowledge message;
an F1 application proposal (F1AP) message;
a bearer context establishment request message;
a bearer context modification request message;
a bearer context modification acknowledge message;
an E1 application proposal (E1AP) message; or
a first measurement collection request message.

In an implementation, the non-UE associated signaling message includes at least one of the following:
an Xn establishment request message;
an Xn establishment response message;
an NG-RAN node configuration update message;
an NG-RAN node configuration update acknowledge message;
a non-UE associated XnAP message;
an F1 establishment response message;
a next generation node base central unit (GNB-CU) configuration update message;
a first measurement collection request message;
a non-UE associated F1AP message;
an E1 establishment request message;
a GNB-CU user plane (UP) E1 establishment response message;
a GNB-CU control plane (CP) E1 establishment request message;
a GNB-CU-CP configuration update message; or
a non-UE associated E1AP message.

In an implementation, obtaining the measurement alignment response information indicated by the second node device includes:
receiving a second message sent by the second node device, in which the second message includes the measurement alignment response information;
in which the second message includes at least one of:
a UE associated signaling message; or
a non-UE associated signaling message.

In an implementation, the UE associated signaling message includes at least one of the following:
an S-NODE addition request acknowledge message;
an S-NODE modification acknowledge message;
an S-NODE modification requirement;
a cell service trace message;
a UE associated XnAP message;
a UE context establishment feedback message;
a UE context modification feedback message;
a UE context modification requirement message;
a UE associated F1AP message;
a bearer context establishment feedback message;
a bearer context modification feedback message;
a bearer context modification requirement message; or
a UE associated E1AP message.

In an implementation, the non-UE associated signaling message includes at least one of the following:
an Xn establishment request message;
an Xn establishment response message;
an NG-RAN node configuration update message;
an NG-RAN node configuration update acknowledge message;
a non-UE associated XnAP message;
an F1 establishment request message;
a GNB distributed unit (DU) configuration update message;
a first measurement collection request message;
a non-UE associated F1AP message;
an E1 establishment feedback message;
a GNB-CU-CP E1 establishment response message;
a GNB-CU-UP E1 establishment request message;
a GNB-CU-UP configuration update message; or
the non-UE associated E1AP message.

In an implementation, the mode of sending the session status information includes:
sending the session status information to the first node device via a first signaling radio bearer (SRB); and/or
sending the session status information to the second node device via a second SRB.

In an implementation, indicating the report configuration information of the an application layer session status to the UE includes:
sending a third message to the UE, in which the third message includes the report configuration information of the application layer session status.

In an implementation, the third message includes at least one of:
a radio resource control (RRC) reconfiguration message;
media access control control element (MAC CE) information; or
downlink control information (DCI).

In an implementation, the first measurement is a minimization of drive test (MDT) measurement, and the second measurement is a quality of experience (QoE) measurement.

A second aspect of embodiments of the disclosure provides a measurement association method, performed by a second node device. The method includes:
obtaining measurement alignment request information indicated by a first node device, in which the measurement alignment request information is configured to request to align a first measurement on the second node device with a second measurement, and/or request to align a first measurement on the first node device with a second measurement associated with the second node device.

In an implementation, the measurement alignment request information includes at least one of:
alignment indication information; or
a first next generation radio access network (NG-RAN) trace identity (ID).

In an implementation, the method further includes:
indicating report configuration information of an application layer session status to a user equipment (UE) based on the measurement alignment request information, in which the report configuration information is configured to instruct the UE to send session status information to the first node device and/or the second node device, and/or indicate a mode of sending the session status information_{∘}

In an implementation, the method further includes:
indicating measurement alignment response information to the first node device.

In an implementation, the measurement alignment response information includes at least one of:
a second NG-RAN trace ID;
a requirement of application layer session status information; or
a report mode of application layer session status information.

In an implementation, the method further includes:
obtaining measurement result information of the second measurement sent by the UE; and
sending the measurement result information to a measurement collection entity (MCE) and/or a trace collection entity (TCE), in which the measurement result information includes a first NG-RAN trace ID and/or a second NG-RAN trace ID.

In an implementation, obtaining the measurement alignment request information indicated by the first node device includes:
receiving a first message sent by the first node device, in which the first message includes the measurement alignment request information;
in which the first message includes at least one of:
a UE associated signaling message; or
a non-UE associated signaling message.

In an implementation, the UE associated signaling message includes at least one of the following:
a secondary node (S-NODE) addition request message;
an S-NODE modification request message;
an S-NODE modification acknowledge message;
a UE associated Xn application proposal (AP) message;
a UE context establishment request message;
a UE context modification request message;
a UE context modification acknowledge message;
an F1 application proposal (F1AP) message;
a bearer context establishment request message;
a bearer context modification request message;
a bearer context modification acknowledge message;
an E1 application proposal (E1AP) message; or
a first measurement collection request message.

In an implementation, the non-UE associated signaling message includes at least one of the following:
an Xn establishment request message;
an Xn establishment response message;
an NG-RAN node configuration update message;
an NG-RAN node configuration update acknowledge message;
a non-UE associated XnAP message;
an F1 establishment response message;
a next generation node base central unit (GNB-CU) configuration update message;
a first measurement collection request message;
a non-UE associated F1AP message;
an E1 establishment request message;
a GNB-CU user plane (UP) E1 establishment response message;
a GNB-CU-CP configuration update message; or
a non-UE associated E1AP message.

In an implementation, indicating the measurement alignment response information to the first node device includes:
sending a second message to the first node device, in which the second message includes the measurement alignment response information;
in which the second message includes at least one of:
   a UE associated signaling message; or
   a non-UE associated signaling message.

In an implementation, the UE associated signaling message includes at least one of the following:
an S-NODE addition request acknowledge message;
an S-NODE modification acknowledge message;
an S-NODE modification requirement;
a cell service trace message;
a UE associated XnAP message;
a UE context establishment feedback message;
a UE context modification feedback message;
a UE context modification requirement message;
a UE associated F1AP message;
a bearer context establishment feedback message;
a bearer context modification feedback message;
a bearer context modification requirement message; or
a UE associated E1AP message.

In an implementation, the non-UE associated signaling message includes at least one of the following:
an Xn establishment request message;
an Xn establishment response message;
an NG-RAN node configuration update message;
an NG-RAN node configuration update acknowledge message;
a non-UE associated XnAP message;
an F1 establishment request message;
a GNB distributed unit (DU) configuration update message;
a first measurement collection request message;
a non-UE associated F1AP message;
an E1 establishment feedback message;
a GNB-CU-CP E1 establishment response message;
a GNB-CU-UP E1 establishment request message;
a GNB-CU-UP configuration update message; or
a non-UE associated E1AP message.

In an implementation, the mode of sending the session status information includes:
sending the session status information to the first node device via a first signaling radio bearer (SRB); and/or
sending the session status information to the second node device via a second SRB.

In an implementation, the method further includes:
obtaining application layer session status information indicated by the UE; and
starting or stopping the first measurement based on the application layer session status information.

In an implementation, the method further includes:
indicating application layer session status information of the UE to an operation administration and maintenance (OAM), and starting or stopping the first measurement based on indication information of the OAM.

A third aspect of embodiments of the disclosure provides a measurement association method performed by a user equipment (UE). The method includes:
receiving report configuration information of an application layer session status indicated by a first node device or a second node device;
in which the report configuration information is determined based on measurement alignment request information, the measurement alignment request information is configured to request to align a first measurement on the second node device with a second measurement, and/or request to align a first measurement on the first node device with a second measurement associated with the second node device, and the report configuration information is configured to instruct the UE to send session status information to the first node device and/or the second node device, and/or indicate a mode of sending the session status information.

In an implementation, the method further includes:
indicating application layer session status information to the first node device and/or the second node device, in which the application layer session status information includes the measurement result information of the second measurement.

In an implementation, the mode of sending the session status information includes:
sending the session status information to the first node device via a first signaling radio bearer (SRB); and/or
sending the session status information to the second node device via a second SRB.

In an implementation, the first measurement is a minimization of drive test (MDT) measurement, and the second measurement is a quality of experience (QoE) measurement.

A fourth aspect of embodiments of the disclosure provides a communication device. The communication device has some or all of the functions of the first node device in implementing the method described in the first aspect. For example, the functions of the communication device may include the functions in some or all of embodiments of the present disclosure. Or the communication device may have the function of implementing the functions of any one embodiment of the present disclosure independently. The functions described can be implemented by hardware, or can be implemented by hardware executing corresponding software. The hardware or software includes one or more units or modules corresponding to the above functions.

In an implementation, the structure of the communication device may include a transceiver module and a processing module, and the processing module is configured to support the communication device to perform corresponding functions in the above methods. The transceiver module is configured to support communication between the communication device and other devices. The communication device may further include a storage module coupled to the transceiver module and the processing module, which stores necessary computer programs and data for the communication device.

For example, the processing module may be a processor, the transceiver module may be a transceiver or a communication interface, and the storage module may be a memory.

A fifth aspect of embodiments of the disclosure provides a communication device. The communication device has some or all of the functions of the second node device in implementing the method described in the second aspect. For example, the functions of the communication device may include the functions in some or all of embodiments of the present disclosure. Or the communication device may have the function of implementing the functions of any one embodiment of the present disclosure independently. The functions described can be implemented by hardware, or can be implemented by hardware executing corresponding software. The hardware or software includes one or more units or modules corresponding to the above functions.

Optionally, in an implementation, the structure of the communication device may include a transceiver module and a processing module, and the processing module is configured to support the communication device to perform corresponding functions in the above methods. The transceiver module is configured to support communication between the communication device and other devices. The communication device may further include a storage module coupled to the transceiver module and the processing module, which stores necessary computer programs and data for the communication device.

A sixth aspect of embodiments of the disclosure provides a communication device. The communication device has some or all of the functions of the terminal in implementing the method described in the third aspect. For example, the functions of the communication device may include the functions in some or all of embodiments of the present disclosure. Or the communication device may have the function of implementing the functions of any one embodiment of the present disclosure independently. The functions described can be implemented by hardware, or can be implemented by hardware executing corresponding software. The hardware or software includes one or more units or modules corresponding to the above functions.

Optionally, in an implementation, the structure of the communication device may include a transceiver module and a processing module, and the processing module is configured to support the communication device to perform corresponding functions in the above methods. The transceiver module is configured to support communication between the communication device and other devices. The communication device may further include a storage module coupled to the transceiver module and the processing module, which stores necessary computer programs and data for the communication device.

A seventh aspect of embodiments of the disclosure provides a communication device. The communication device includes a processor. When the processor calls a computer program in a memory, the measurement association method described in the first aspect is performed.

An eighth aspect of embodiments of the disclosure provides a communication device. The communication device includes a processor. When the processor calls a computer program in a memory, the measurement association method described in the second aspect is performed.

A ninth aspect of embodiments of the disclosure provides a communication device. The communication device includes a processor. When the processor calls a computer program in a memory, the measurement association method described in the third aspect is performed.

A tenth aspect of embodiments of the disclosure provides a communication device. The communication device includes a processor and a memory, and a computer program is stored in the memory. The processor executes the computer program stored in the memory, to cause the communication device to perform the measurement association method described in the first aspect above.

An eleventh aspect of embodiments of the disclosure provides a communication device. The communication device includes a processor and a memory, and a computer program is stored in the memory. The processor executes the computer program stored in the memory, to cause the communication device to perform the measurement association method described in the second aspect above.

A twelfth aspect of embodiments of the disclosure provides a communication device. The communication device includes a processor and a memory, and a computer program is stored in the memory. The processor executes the computer program stored in the memory, to cause the communication device to perform the measurement association method described in the third aspect above.

A thirteenth aspect of embodiments of the disclosure provides a communication device. The communication device includes a processor and an interface circuit. The interface circuit is configured to receive code instructions and transmit them to the processor. The processor is communication to run the code instructions to cause the communication device to perform the measurement association method described in the first aspect above.

A fourteenth aspect of embodiments of the disclosure provides a communication device. The communication device includes a processor and an interface circuit. The interface circuit is configured to receive code instructions and transmit them to the processor. The processor is communication to run the code instructions to cause the communication device to perform the measurement association method described in the second aspect above.

A fifteenth aspect of embodiments of the disclosure provides a communication device. The communication device includes a processor and an interface circuit. The interface circuit is configured to receive code instructions and transmit them to the processor. The processor is communication to run the code instructions to cause the communication device to perform the measurement association method described in the third aspect above.

A sixteenth aspect of embodiments of the disclosure provides a communication system. The system includes the communication device according to the fourth aspect, the communication device according to the fifth aspect, and the communication device according to the sixth aspect, or the system includes the communication device according to the seventh aspect, the communication device according to the eighth aspect, and the communication device according to the ninth aspect, or the system includes the communication device according to the tenth aspect, the communication device according to the eleventh aspect, and the communication device according to the twelfth aspect, or the system includes the communication device according to the thirteenth aspect, the communication device according to the fourteenth aspect, and the communication device according to the fifteenth aspect.

A seventeenth aspect of embodiments of the disclosure provides a computer-readable storage medium for storing instructions used by a first node device. When the instructions are executed, the first node device is caused to perform the measurement association method described in the first aspect above.

An eighteenth aspect of embodiments of the disclosure provides a computer-readable storage medium for storing instructions used by a second node device. When the instructions are executed, the second node device is caused to perform the measurement association method described in the second aspect above.

A nineteenth aspect of embodiments of the disclosure provides a computer-readable storage medium for storing instructions used by a terminal. When the instructions are executed, the terminal is caused to perform the measurement association method described in the third aspect above.

A twentieth aspect of embodiments of the disclosure provides a computer program product including a computer program that, when run on a computer, causes a computer to perform the measurement association method described in the first aspect above.

A twenty-first aspect of embodiments of the disclosure provides a computer program product including a computer program that, when run on a computer, causes a computer to perform the measurement association method described in the second aspect above.

A twenty-second aspect of embodiments of the disclosure provides a computer program product including a computer program that, when run on a computer, causes a computer to perform the measurement association method described in the third aspect above.

A twenty-third aspect of embodiments of the disclosure provides a chip system. The chip system includes at least one processor and an interface, for supporting a first node device to implement the functions involved in the first aspect, for example, determining or processing at least one of the data and information involved in the method above.

In a possible design, the chip system further includes a memory, and the memory is configured to store a necessary computer program and data for the terminal. The chip system may be composed of chips, or may include chips and other discrete devices.

A twenty-fourth aspect of embodiments of the disclosure provides a chip system. The chip system includes at least one processor and an interface, for supporting a second node device to implement the functions involved in the second aspect, for example, determining or processing at least one of the data and information involved in the method above.

In a possible design, the chip system further includes a memory, and the memory is configured to store a necessary computer program and data for the terminal. The chip system may be composed of chips, or may include chips and other discrete devices.

A twenty-fifth aspect of embodiments of the disclosure provides a chip system. The chip system includes at least one processor and an interface, for supporting a terminal to implement the functions involved in the third aspect, for example, determining or processing at least one of the data and information involved in the method above.

In a possible design, the chip system further includes a memory, and the memory is configured to store a necessary computer program and data for the terminal. The chip system may be composed of chips, or may include chips and other discrete devices.

A twenty-sixth aspect of embodiments of the disclosure provides a computer program that, when run on a computer, causes the computer to perform the measurement association method described in the first aspect.

A twenty-seventh aspect of embodiments of the disclosure provides a computer program that, when run on a computer, causes the computer to perform the measurement association method described in the second aspect.

In a twenty-eighth aspect of embodiments of the disclosure provides a computer program that, when run on a computer, causes the computer to perform the measurement association method described in the third aspect.

To sum up, the measurement association method, apparatus, device, chip system, storage medium, computer program and computer program product provided by the embodiments of the present disclosure can achieve the following technical effects.

By indicating the measurement alignment request information to the second node device, in which the measurement alignment request information is configured to request to align the first measurement on the second node device and the second measurement, it can be achieved that the first measurement on the second node device is aligned with the second measurement on the terminal, and the first measurement on the first node device is aligned with the second measurement associated with the second node, thereby effectively improving the association effect between the first measurement and the second measurement.

### BRIEF DESCRIPTION OF THE DRAWINGS

In order to more clearly illustrate the technical solutions in embodiments of the disclosure or the background technology, the accompanying drawings required to be used in the embodiments or the background technology of the disclosure will be described below.
FIG. 1 is a schematic architectural diagram of a communication system provided by an embodiment of the present disclosure;
FIG. 2 is a flow chart of a measurement association method provided by an embodiment of the present disclosure;
FIG. 3 is a flow chart of a measurement association method provided by an embodiment of the present disclosure;
FIG. 4 is a flow chart of a measurement association method provided by an embodiment of the present disclosure;
FIG. 5 is a flow chart of a measurement association method provided by an embodiment of the present disclosure;
FIG. 6 is a flow chart of a measurement association method provided by an embodiment of the present disclosure;
FIG. 7 is a flow chart of a measurement association method provided by an embodiment of the present disclosure;
FIG. 8 is a schematic diagram of measurement association provided by an embodiment of the present disclosure;
FIG. 9a is a flow chart of a measurement association method provided by an embodiment of the present disclosure;
FIG. 9b is a flow chart of a measurement association method provided by an embodiment of the present disclosure;
FIG. 10 is a flow chart of a measurement association method provided by an embodiment of the present disclosure;
FIG. 11 is a flow chart of a measurement association method provided by an embodiment of the present disclosure;
FIG. 12 is a schematic diagram of measurement association provided by an embodiment of the present disclosure;
FIG. 13 is a flow chart of a measurement association method provided by an embodiment of the present disclosure;
FIG. 14 is a flow chart of a measurement association method provided by an embodiment of the present disclosure;
FIG. 15 is a block diagram of a communication device provided by an embodiment of the present disclosure;
FIG. 16 is a block diagram of a communication device provided by an embodiment of the present disclosure;
FIG. 17 is a schematic diagram of a chip according to an embodiment of the present disclosure.

### DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following embodiments do not represent all implementations consistent with embodiments of the present disclosure. Rather, they are merely examples of apparatus and methods consistent with aspects of embodiments of the disclosure as detailed in the appended claims.

The terminology used in the embodiments of the present disclosure is for the purpose of describing particular embodiments only and is not intended to limit the embodiments of the present disclosure. As used in the embodiments of the present disclosure and the appended claims, the singular forms "a", "an" and "the" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc., may be used to describe various information in the embodiments of the present disclosure, the information should not be limited to these terms. These terms are only used to distinguish information of the same type from each other. For example, without departing from the scope of the embodiments of the present disclosure, the first information may also be called second information, and similarly, the second information may also be called first information. Depending on the context, the words "if" as used herein may be interpreted as "when" or "while" or "in response to determining."

In order to better understand the measurement association method according to embodiments of the present disclosure, a communication system to which embodiments of the present disclosure are applied is first described below.

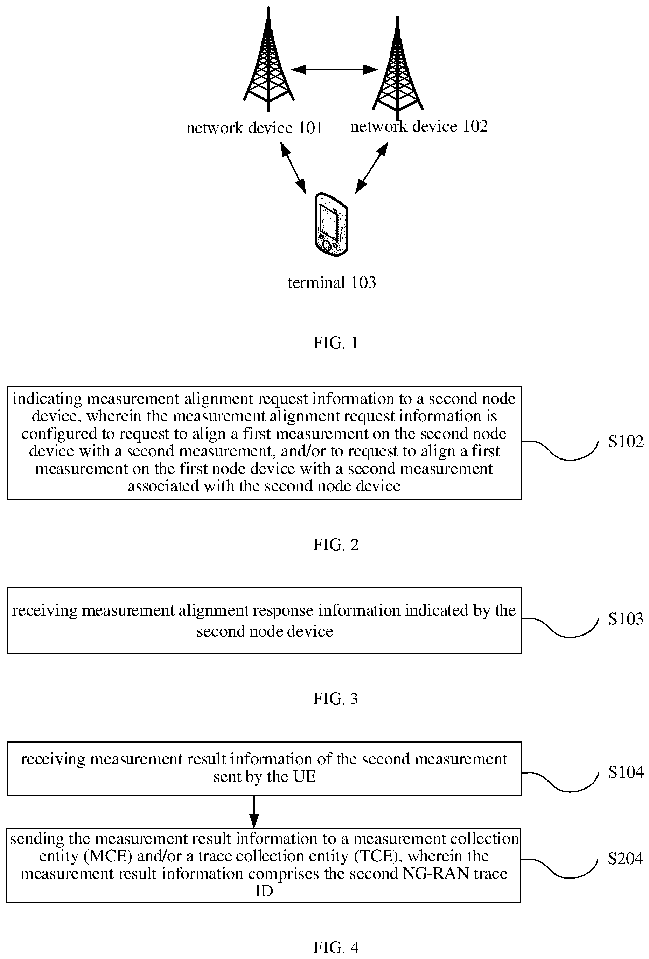

With reference to FIG. 1, FIG. 1 is a structure schematic diagram illustrating a communication system provided by an embodiment of the present disclosure. The communication system may include but is not limited to two network devices and a terminal. The number and form of devices shown in FIG. 1 are only for examples and do not constitute a limitation on the embodiments of the present disclosure. In actual applications, it may include two or more network devices, and two or more terminals. For example, the communication system shown in FIG. 1 includes a network device 101 serving as a master node, a network device 102 serving as a secondary node, and a terminal 103.

It should be noted that the technical solutions of the embodiments of the present disclosure can be applied to various communication systems, such as a long term evolution (LTE) system, a fifth generation (5G) mobile communication system, a 5G new radio (NR) system, or other future new mobile communication systems.

The network device 101 and the network device 102 in embodiments of the present disclosure are entities on the network side that are used to transmit or receive signals. For example, the network device 101 and the network device 102 may be an evolved base station (evolved NodeB, eNB), a transmission reception point (TRP), a next generation base station (next generation NodeB, gNB) in an NR system, or base stations in other future mobile communication systems or access nodes in wireless fidelity (WiFi) systems, etc. The embodiments of the present disclosure do not limit the specific technologies and specific device forms used by the network device.

The network device provided by embodiments of the present disclosure may be composed of a centralized unit (CU) and distributed units (DU). The CU may also be called a control unit (control unit). By using the CU-DU structure, the protocol layers of the network device, such as the base station, can be separated, with some protocol layer functions placed on the CU for centralized control, and part of or all of the remaining protocol layer functions distributed in the DUs, and the CU centrally controls the DUs.

In embodiments of the present disclosure, the network device 101 as the master node and the network device 102 as the secondary node may be base stations, central unit control plane (CU-CP), or central unit user plane (CU-UP) or distributed units (DU), etc.

The terminal 103 in the embodiments of the present disclosure is an entity on a user side for receiving or transmitting signals, such as a mobile phone. The terminal may also be called a terminal device, user equipment (UE), a mobile station (MS), a mobile terminal device (mobile terminal, MT), etc. The terminal can be a car with communication functions, a smart car, a mobile phone, a wearable device, a tablet (Pad), a computer with a wireless transceiver function, a virtual reality (VR) terminal, an augmented reality ( augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc.

The embodiments of the present disclosure do not limit the specific technology and specific device form used by the terminal.

It can be understood that the communication system described in the embodiments of the present disclosure is to more clearly illustrate the technical solutions of the embodiments of the present disclosure, and does not constitute a limitation on the technical solutions provided by the embodiments of the present disclosure. As those skilled in the art may know, with the evolution of system architecture and the emergence of new service scenarios, the technical solutions provided by the embodiments of the present disclosure are also applicable to similar technical problems.

It can be understood that the communication system described in the embodiments of the present disclosure is to more clearly illustrate the technical solutions of the embodiments of the present disclosure, and does not constitute a limitation on the technical solutions provided by the embodiments of the present disclosure. As those skilled in the art may know, with the evolution of system architecture and the emergence of new service scenarios, the technical solutions provided by the embodiments of the present disclosure are also applicable to similar technical problems.

A measurement association method and its device provided by the present disclosure will be introduced in detail below with reference to the accompanying drawings. FIG. 2 is a flowchart of a measurement association method provided by an embodiment of the present disclosure. The method is performed by a first node device. The measurement association method in this embodiment can be applied to a node device, such as a base station, a central unit control plane, a central unit user plane or a distribution unit, etc.

As shown in FIG. 2, the method may include but is not limited to the following steps.

At S102, measurement alignment request information is to a second node device, the measurement alignment request information is configured to request to align a first measurement on the second node device with a second measurement, and/or to request to align a first measurement on the first node device with a second measurement associated with the second node device.

It is understandable that in the development process of the fifth generation (5G) mobile communication technology, in order to improve the utilization of previous communication construction results and the coverage of 5G, the technical solutions of dual connectivity (DC) is proposed.

Based on the dual connectivity technology, a UE can be connected to two node devices (for example, two 5G base stations, or a 5G base station and a 4G base station, or other possible combinations) at the same time, thereby effectively improving data transmission rate. During the data transmission process, a master node can split a bearer at a packet level and control a designated data packet to be the transmitted to the UE via a secondary node.

The first node device may be a master node device. The second node device may be a secondary node device.

Measurement alignment refers to performing alignment processing on multiple measurement processes or results in a specified dimension (such as time) and/or association of multiple measurement identities (ID).

The first measurement on the second node device may refer to measuring Minimization of Drive Tests (MDT). By measuring the MDT, automatic collection and analysis of a UE measurement report containing location information can be realized, to reduce workload of manual drive test to a maximum extent. Similarly, similar descriptions are suitable to the second measurement on the second node device.

The first measurement on the second node device can also refer to measuring Quality of Experience (QoE). By measuring the QoE, user's subjective feelings on quality and performance of a device, a network and system, an application or a service can be automatically learned. Similarly, similar descriptions are suitable to the second measurement on the second node device.

The second measurement associated with the second node device may refer to second measurement (such as measurement start and end time point of the sent second measurement, or the measurement ID of the sent second measurement, there is no limitation on this) sent by the UE received by the second node device. For example, the measurement can be initiated by the first node device, instructing the UE to perform the measurement and send a measurement result to the second node device, or the measurement can be initiated by other node devices serving as secondary node devices (for example, the measurement is initiated by a third node device that is different from the first node device and the second node device, the third node device instructs the UE to perform the measurement and send the measurement result to the second node device).

The first measurement on the first node device may refer to measuring MDT or measuring QoE. Measuring MDT or measuring QoE may be initiated by the first node device, or a device on the operator side may instruct the first node device to initiate the measuring, and there is no restriction on this.

Aligning the first measurement on the second node device and the second measurement may include, for example, aligning the first measurement on the second node device and the second measurement on the UE in a time dimension. For example, a measurement start time of the first measurement is consistent with a measurement start time of the second measurement, and the measurement end time of the first measurement is consistent with the measurement end time of the second measurement. For another example, an identity document (ID) of the first measurement is associated with an ID of the second measurement. There is no limitation on this.

Aligning the first measurement on the first node device with the second measurement associated with the second node device may include, for example, associating the first measurement on the first node device with an ID of the second measurement received by the second device which is sent by the UE. Or, there may be other forms of alignment, which is not limiter herein.

The measurement alignment request information refers to relevant information used to request measurement alignment, for example, it can indicate objects and an alignment mode of measurement alignment, etc.

In a dual connectivity scenario, a node that is directly connected to a core network and manages control signaling can be called a master node (MN), and other nodes in the dual connectivity scenario can be called a secondary node (SN).

The first measurement may refer to measuring the Minimization of Drive Tests (MDT), and the second measurement may refer to measuring the Quality of Experience (QoE). It should be understood that, the first measurement may also refer to measuring the Quality of Experience (QoE), and the second measurement may also refer to measuring the Minimization of Drive Tests (MDT), or the first measurement and the second measurement can be any other possible measurements, and there is no limit to this.

Therefore, in embodiments of the present disclosure, it is possible to realize time alignment and ID association of the first measurement on the second node device and the second measurement on the UE, and the first measurement on the first node device is associated with ID of the second measurement on the UE received by the second node, thereby effectively improving the association effect between the first measurement and the second measurement.

In this embodiment, by indicating the measurement alignment request information to the second node device, in which the measurement alignment request information is used to request to align the first measurement on the second node device with the second measurement and/or to request to align the first measurement on the first node device with the second measurement associated with the second node device, the first measurement on the second node device can be aligned with the second measurement on the UE, and the first measurement on the first node device can be aligned with the second measurement associated with the second node, thereby effectively improving the association effect between the first measurement and the second measurement.

Embodiments of the present disclosure also provide a measurement association method, in which the measurement alignment request information includes at least one of the following: alignment indication information; and a first next generation radio access network (NG-RAN) trace identity (ID), i.e., NG-RAN trace ID.

The first NG-RAN trace ID refers to a corresponding NG-RAN Trace ID on the first node device when the UE performs management-based MDT measurement, or a corresponding NG-RAN Trace ID when the UE performs signaling-based MDT measurement.

FIG. 3 is a flowchart of a measurement association method provided by an embodiment of the present disclosure. The method is executed by the first node device. The measurement association method in this embodiment can be applied to node devices. As shown in FIG. 3, the method may include but is not limited to the following steps_{∘}

At S103, the measurement alignment response information indicated by the second node device is obtained.

Obtaining the measurement alignment response information indicated by the second node device may, for example, receiving the measurement alignment response information indicated by the second node device, or may also be obtaining the measurement alignment response information indicated by the second node device by any other possible methods, which is not limited herein.

The measurement alignment response information refers to the information generated by the second node device in response to the measurement alignment request, and can be used to indicate a configuration process of an application layer session status to the UE.

That is to say, in this embodiment of the present disclosures, the above-mentioned measurement alignment response information may be generated by the second node device and transmitted to the first node device to indicate the measurement association response process.

In this embodiment, by obtaining the measurement alignment response information indicated by the second node device, reliable reference information can be provided for the configuration process of the application layer session status.

Embodiments of the present disclosure also provide a measurement association method, in which the measurement alignment response information includes at least one of the following: a second NG-RAN trace ID; a requirement of application layer session status information; or a report mode of application layer session status information, which can enrich the indication content of the measurement alignment response information, and effectively improve the indication effect of the measurement alignment response information in the measurement association process.

The second NG-RAN Trace ID refers to a corresponding NG-RAN Trace ID on the second node device when the UE performs management-based MDT measurement.

In the present disclosure, the NG-RAN Trace ID includes trace reference (TraceReference) and trace recording session reference, and is used to identify a globally unique first measurement task.

The session status information refers to status information of whether the UE application layer starts the second measurement. For example, it may include started, stopped, on-going or not started (notstarted).

The requirement of application layer session status information may be used to indicate whether the UE sends the session status information to the first node device and/or the second node device.

The report mode of application layer session status information can be used to indicate a mode of sending the session status information of the UE.

Embodiments of the present disclosure also provide a measurement association method, in which, report configuration information of the application layer session status to the UE according to the measurement alignment response information. The report configuration information is used to instruct the UE to send the session status information to the first node device and/or the second node device, and/or indicate mode of sending the session status information, thereby accurately indicating the configuration process of the application layer session status to the UE.

FIG. 4 is a flowchart of a measurement association method provided by an embodiment of the present disclosure. The method is executed by the first node device. The measurement association method in this embodiment can be applied to node devices.

As shown in FIG. 4, the method may include but is not limited to the following steps.

At S104, measurement result information of the second measurement sent by the UE is received.

The second NG-RAN trace ID is received from the second node device, and is the NG-RAN trace ID of the management-based MDT of the UE on the second node device.

After receiving the measurement result information of the second measurement sent by the UE, the second NG-RAN trace ID may be included in the measurement result information.

The measurement result information may be used to describe relevant information obtained by the UE through the second measurement process.

At S204, the measurement result information is sent to a measurement collection entity (MCE) and/or a trace collection entity (TCE). The measurement result information includes the second NG-RAN trace ID.

The measurement collection entity (MCE) and the trace collection entity (TCE) can be used to perform association analysis of the first measurement and the second measurement, so as to perform optimization analysis and problem location.

In this embodiment, by receiving the measurement result information of the second measurement sent by the UE, the measurement result information is sent to the MCE and/or the TCE, in which the measurement result information includes the second NG-RAN trace ID, and the association accuracy in the measurement association process can be effectively improved based on the second NG-RAN trace ID.

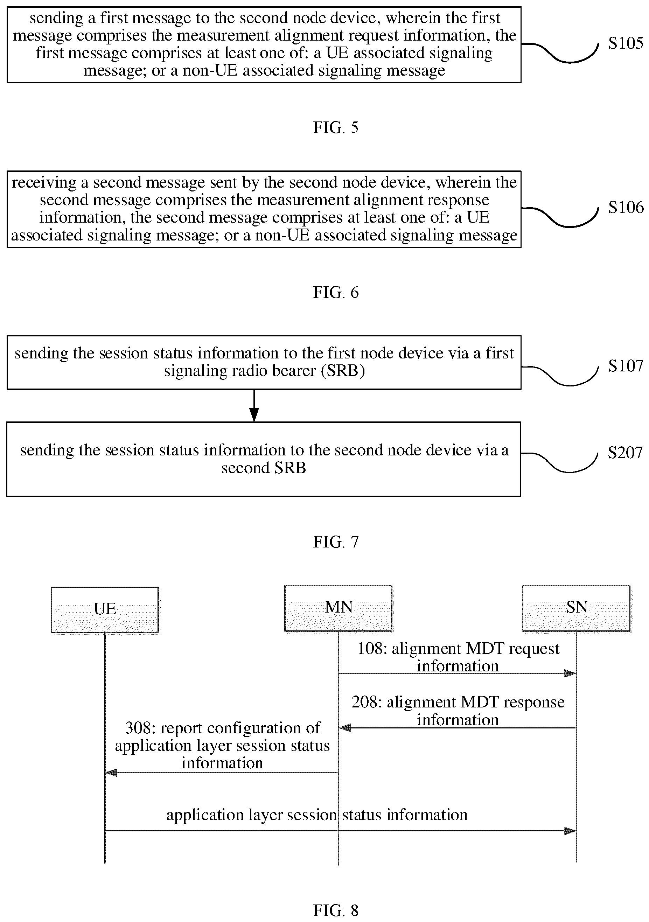

FIG. 5 is a flowchart of a measurement association method provided by an embodiment of the present disclosure. The method is executed by the first node device. The measurement association method in this embodiment can be applied to node devices.

As shown in FIG. 5, the method may include but is not limited to the following steps.

At S105, a first message is sent to the second node device, the first message includes the measurement alignment request information, and the first message may include at least one of the following: a UE associated signaling message; or, a non-UE associated signaling message information.

The first message may be the UE associated signaling message; and/or, the non-UE associated signaling message.

In this embodiment, by sending the first message to the second node device, in which the first message includes the measurement alignment request information, and the first message includes at least one of the following: the UE associated signaling message or the non-UE associated signaling message, reliable reference information can be provided for the signaling-based measurement process.

Embodiments of the present disclosure also provide a measurement association method, in which the UE associated signaling message includes at least one of the following: a secondary node (S-NODE) addition request message; an S-NODE modification request message; an S-NODE modification acknowledge message; a UE associated Xn application proposal (XnAP) message; a UE context establishment request message; a UE context modification request message; a UE context modification acknowledge message; an F1 application proposal (F1AP) message; a bearer context establishment request message; a bearer context modification request message; a bearer context modification acknowledge message; an E1 application proposal (E1AP) message; or a first measurement collection request message. Thus it can effectively improve the comprehensiveness of the indication of the UE associated signaling message, to facilitate the second node device to obtain comprehensive signaling information, and ensure the measurement association effect.

The S-NODE addition request message is used to request to add a secondary node.

The S-NODE modification request message is used to request the secondary node to modify relevant information.

The S-NODE modification acknowledge message is used to confirm an S-NODE modification requirement of the second node device and instruct the second node device to perform modification according to the S-NODE modification requirement.

Xn is an open interface that can be used for interconnection between NG-RAN nodes. The Xn application protocol messages refers to relevant information in the application protocol corresponding to the Xn interface.

The UE context establishment request message is used to request to establish context for a designated UE.

The UE context modification request message is used to request to modify the context of the designated UE.

The UE context modification acknowledge message is used to acknowledge a UE context modification requirement message sent by the second node device.

The F1 application proposal (F1AP) message refers to relevant information in the application protocol corresponding to the interface F1.

A bearer refers to a channel used to carry data transmission between a radio resource control (RRC) layer and a Packet Data Convergence Protocol (PDCP) layer.

The bearer context establishment request message is used to request to establish context of a designated bearer.

The bearer context modification request message is used to request to modify the context of the designated bearer.

The bearer context modification acknowledge message is used to acknowledge a bearer context modification requirement message sent by the second node device.

The E1 application protocol message refers to relevant information in the application protocol corresponding to the E1 interface.

The first measurement collection request message may be used to request the second node device to perform collection work corresponding to the first measurement.

Embodiments of the present disclosure also provide a measurement association method, in which the non-UE associated signaling message includes at least one of the following: an Xn establishment request message; an Xn establishment response message; an NG-RAN node configuration update message; an NG-RAN node configuration update acknowledge message; a non-UE associated XnAP message; an F1 establishment response message; a next generation node base central unit (GNB-CU) configuration update message; a first measurement collection request message; a non-UE associated F1AP message; an E1 establishment request message; a GNB-CU user plane (UP) E1 establishment response message; a GNB-CU control plane (CP) E1 establishment request message; a GNB-CU-CP configuration update message; or a non-UE associated E1AP message. Thus it can effectively improve the effect of indicating the non-UE associated signaling message comprehensiveness of the indication of the UE associated signaling message, to suit personalized application scenarios.

The Xn establishment request message is used by the first node device to request the second node device to establish a connection based on Xn.

The Xn establishment response message is used by the first node device to respond to the Xn establishment request message sent by the second node device to establish a connection based on Xn.

The NG-RAN node configuration update message refers to configuration information of a corresponding node of a 5G radio access network. For example, it may be configuration update information of a 5G base station gNB, or update configuration information of an ng-eNB.

The NG-RAN node configuration update acknowledge message is used to acknowledge the NG-RAN node configuration update message sent by the second node device.

The F1 establishment response message may be used to respond an F1 establishment request message sent by a corresponding second node device.

The GNB-CU configuration update message refers to configuration update information corresponding to a GNB central unit (CU).

The first measurement collection request message may be used to request the second node device to perform collection work corresponding to the first measurement.

The non-UE associated F1 application protocol message refers to the F1 application protocol message that is not related to the UE.

The E1 establishment request message may be used to request the second node device to establish a connection based on the E1 interface.

The GNB-CU-UP E1 establishment response message is used to respond to a GNB-CU-UP E1 establishment request message sent by the second node device.

The GNB-CU-CP E1 establishment request message is used to request the second node device to establish a connection with the GNB-CU-CP based on the E1 interface.

The GNB-CU-CP configuration update message is used to instruct the second node device to update the configuration of the GNB-CU-CP.

The non-UE associated E1 application protocol message refers to the E1 application protocol messages that is not related to the UE during the measurement association process.

FIG. 6 is a flowchart of a measurement association method provided by an embodiment of the present disclosure. The method is executed by the first node device. The measurement association method in this embodiment can be applied to node devices.

As shown in FIG. 6, the method may include but is not limited to the following steps.

At S106, a second message sent by the second node device is received, the second message includes the measurement alignment response information, and the second message includes at least one of the following: a UE associated signaling message; or a non-UE associated signaling message.

The second message may be a message generated by the second node device and sent to the first node device during the measurement association process.

In this embodiment, by receiving the second message sent by the second node device, in which the second message includes the measurement alignment response information, and the second message includes at least one of the following: the UE associated signaling message; or the non-UE associated signaling message, the first node device can be accurately instructed to perform the corresponding measurement association process based on the second message, thereby effectively improving the reliability of the measurement association process of the first node device.

Embodiments of the present disclosure also provide a measurement association method, in which the UE associated signaling message includes at least one of the following: an S-NODE addition request acknowledge message; an S-NODE modification acknowledge message; an S-NODE modification requirement; a cell service trace message; a UE associated XnAP message; a UE context establishment feedback message; a UE context modification feedback message; a UE context modification requirement message; a UE associated F1AP message; a bearer context establishment feedback message; a bearer context modification feedback message; a bearer context modification requirement message; or a UE associated E1AP message, which can effectively improve the practicality of the UE associated signaling message.

The S-NODE addition request acknowledge message is used to acknowledge an S-NODE addition request message sent by the first node device.

The S-NODE modification acknowledge message is used to acknowledge an S-NODE modification request message sent by the first node device.

The S-NODE modification requirement is used to indicate modification requirement information corresponding to the second node device to the first node device.

The cell service trace message may be, for example, positioning trace data of a network communication service in a current cell.

The UE associated Xn application protocol message is relevant information in the application protocol corresponding to the Xn interface and related to the UE.

The UE context establishment feedback message may be used to feed back a UE context establishment request message sent by the first node device.

The UE context modification feedback message may be used to feed back a UE context modification request message sent by the first node device.

The UE context modification requirement message may be used to indicate requirement information corresponding to UE context modification to the first node device.

The UE associated F1 application protocol message is used to instruct the UE associated F1 application protocol message to the first node device.

The bearer context establishment feedback message may be used to feed back a bearer context establishment request message sent by the first node device.

The bearer context modification feedback message may be used to feed back a bearer context modification request message sent by the first node device.

The bearer context modification requirement message is used to indicate requirement information of a corresponding modification process of the bearer context to the first node device.

The UE associated E1 application protocol message is used to instruct the UE associated E1 application protocol message to the first node device.

Embodiments of the present disclosure also provide a measurement association method, in which the non-UE associated signaling message includes at least one of the following: an Xn establishment request message; an Xn establishment response message; an NG-RAN node configuration update message; an NG-RAN node configuration update acknowledge message; a non-UE associated XnAP message; an F1 establishment request message; a GNB distributed unit (DU) configuration update message; a first measurement collection request message; a non-UE associated F1AP message; an E1 establishment feedback message; a GNB-CU-CP E1 establishment response message; a GNB-CU-UP E1 establishment request message; a GNB-CU-UP configuration update message; or the non-UE associated E1AP message, which can effectively improve the adaptability between the non-UE associated signaling message and personalized application scenarios.

The Xn establishment request message is used to request the first node device to establish a connection based on Xn.

The Xn establishment response message is used to respond to an Xn establishment request message sent by the first node device.

The NG-RAN node configuration update message is used to indicate the NG-RAN node configuration update to the first node device.

The NG-RAN node configuration update acknowledge message is used to acknowledge an NG-RAN node configuration update message sent by the first node device.

The non-UE associated Xn application protocol message is used to indicate the non-UE associated Xn application protocol message to the first node device.

The F1 establishment request message is used to request the first node device to establish a connection based on F1.

The GNB-DU configuration update message is used to indicate a GNB-DU configuration update message to the first node device.

The first measurement collection request message is used by the first node device to request first measurement collection.

The non-UE associated F1 application protocol message is used to indicate the non-UE associated F1 application protocol message to the first node device.

The E1 establishment feedback message is used to feed back an E1 establishment request message sent by the first node device.

The GNB-CU-CP E1 establishment response message is used to respond to a GNB-CU-CP E1 establishment request message sent by the first node device.

The GNB-CU-UP E1 establishment request message is used to request the first node device to establish a connection with the GNB-CU-CP based on the E1 interface.

The GNB-CU-UP configuration update message is used to indicate the configuration update message of the control unit control panel (GNB-CU-CP) to the first node device.

The non-UE associated E1 application protocol message is used to indicate the non-UE associated E1 application protocol message to the first node device.

FIG. 7 is a flowchart of a measurement association method provided by an embodiment of the present disclosure. The method is executed by the first node device. The measurement association method in this embodiment can be applied to node devices.

As shown in FIG. 7, the method may include but is not limited to the following steps.

At S107, the session status information is sent to the first node device through a first signaling radio bearer (SRB).

At S207, the session status information is to the second node device through a second signaling radio bearer SRB.

It can be understood that, a session can be an application layer measurement performed by the UE application layer. For example, when the UE starts a video service, and watching a video can be considered as a session. When the session starts, the UE application layer starts an application layer-related measurement. When the session ends, the UE application layer ends the application layer-related measurement.

In this embodiment, by sending the session status information to the first node device through the first SRB, and/or sending the session status information to the second node device through the SRB, the first node device and/or the second node device that participate in the first measurement can receive the status information related to the second measurement more quickly, and start or stop the first measurement according to the status information, so that first measurement and second measurement can be better aligned in a time dimension, for subsequent optimization analysis and problem location.

Embodiments of the present disclosure also provide a measurement association method, further including: sending a third message to the UE. The third message includes the report configuration information of the application layer session status. In this way, the UE can obtain the report configuration information of the application layer session status timely based on the third message, so that the UE can make a corresponding response timely.

The third message may be generated by the first node device and/or the second node device and sent to the UE, to indicate the report configuration information of the application layer session status.

Embodiments of the present disclosure also provide a measurement association method, in which the third message includes at least one of the following: a radio resource control (RRC) reconfiguration message; media access control control element (MAC CE) information; or downlink control information (DCI), so as to effectively improve the instruction effect of the third message on the UE.

The RRC reconfiguration message may be used to indicate an RRC reconfiguration process of the UE.

The MAC CE information refers to control information about an MAC layer.

The DCI may be used to indicate the content of a downlink public control channel.

The first measurement in embodiments of the present disclosure is a minimization of drive test (MDT) measurement, and the second measurement is a quality of experience (QoE) measurement.

For example, as shown in FIG. 8, FIG. 8 is a schematic diagram of measurement association provided by an embodiment of the present disclosure, in which the execution steps can be illustrated as follows.

At step 108, a MN (master node) sends alignment MDT request information to a SN (secondary node). The alignment MDT request information is used to request MDT measurement on the SN (secondary node). The requested MDT measurement is used to analyze QoE, and needs to be aligned with the QoE measurement.

In some embodiments, if the alignment MDT request information is directed to a specific UE, the alignment MDT request is transmitted via a UE associated signaling message, and the alignment MDT request information is included in an S-NODE ADDITION REQUEST message, an S-NODE MODIFICATION REQUEST message, an S-NODE MODIFICATION CONFIRM (S-NODE modification acknowledge) message or other XnAP message sent from the MN (master node) to the SN (secondary node).

In other embodiments, if the alignment MDT request information is directed to a specific cell or base station, the alignment MDT request information is transmitted by a non-UE associated signaling message. The alignment MDT request information is included in an XN SETUP REQUEST (Xn setup request) message, an XN SETUP RESPONSE (Xn setup response) message, and an NG-RAN NODE CONFIGURATION UPDATE (NG-RAN node configuration update) message, an NG-RAN NODE CONFIGURATION UPDATE ACKNOWLEDGE (NG-RAN node configuration update acknowledge) message or other non-UE associated XnAP message sent by the MN (master node) to the SN (secondary node).

Optionally, the alignment MDT request information includes an NG-RAN Trace ID of the UE on the master node. If the alignment MDT request information is transmitted by a UE associated signaling message, the NG-RAN Trace ID is an NG-RAN Trace ID of signaling-based MDT or an NG-RAN Trace ID of management-based MDT. If the alignment MDT request information is transmitted via a non- UE associated signaling message, the NG-RAN Trace ID is an NG-RAN Trace ID of management-based MDT.

It should be understood that the above is only an example, and the message including the alignment MDT request information is not limited thereto.

At step 208, the SN (secondary node) receives the alignment MDT request information, considers the information, and selects a UE for performing MDT measurement. This ensures that the SN (secondary node) selects a UE that has been configured with QoE measurement for performing the MDT measurement, which can increase the MDT measurement to assist the QoE analysis to analyze the QoE problem more accurately. If the SN (secondary node) is configured with MDT, the SN (secondary node) sends alignment MDT response information to the MN (master node), and the information can include at least one of the following:
(1) a requirement of Application Layer Session status information, used to indicate whether the SN (secondary node) requires the UE to directly send Application Layer Session status information to the SN (secondary node) ;
(2) a report mode of Application Layer Session status information, if the SN (secondary node) needs the UE to directly send the Application Layer Session status information to the SN (secondary node), the Report mode of Application Layer Session status information is used to instruct the MN (master node) how to configure the reporting mode of Application Layer Session status information (session status information) for the UE.

For example, it may be through SRBx. The SRBx in this disclosure refers to a signaling radio bearer for directly transmitting QoE-related information (for example, QoE configuration, a QoE measurement status and/or a QoE report, etc.) between the UE and the SN (secondary node). The signaling radio bearer can be a SRB3, a split SRB or a new SRB (such as SN-SRB4 or SRB5), etc.

If the alignment MDT request information includes a first NG-RAN Trace ID on the MN of the UE, and if the SN receives the QoE report from the UE, it may make the received first NG-RAN Trace ID on the MN and/or a second NG-RAN Trace ID on the SN to be included in the QoE report, and send the QoE report to the MCE and/or TCE.

It should be noted that the application layer or the application layer measurement in the embodiments of the present disclosure can also be replaced by QoE or QoE Measurement Collection (QMC). The application layer session has the same meaning as the QoE session and the QMC session.

In some embodiments, if the alignment MDT response information is for a specific UE, the alignment MDT response is transmitted by a UE associated signaling message, and the alignment MDT response information is included in an S-NODE ADDITION REQUEST ACKNOWLEDGE (s node addition request acknowledge) message, an S-NODE MODIFICATION REQUEST ACKNOWLEDGE (s node modification request acknowledge) message, an S-NODE MODIFICATION REQUEST (S-NODE Modification Request) message, or other XnAP (Xn Application Protocol) message sent from the MN (master node) to the SN (secondary node).

In other embodiments, if the alignment MDT request (alignment MDT response) information is directed to a specific cell or base station, the alignment MDT response (alignment MDT response) information is transmitted by a non-UE associated signaling message. The MDT request (aligned MDT response) information is included in an XN SETUP REQUEST (Xn setup request) message, an XN SETUP RESPONSE (Xn setup response) message, an NG-RAN NODE CONFIGURATION UPDATE (NG-RAN node configuration update) message, an NG-RAN NODE CONFIGURATION UPDATE ACKNOWLEDGE (NG-RAN node configuration update acknowledge) message or other non-UE associated XnAP message.

It should be understood that the above is only an example, and the message including the alignment MDT response information is not limited thereto.

At step 308, the MN (master node) sends report configuration of Application Layer Session status information to the UE. The information is used to indicate whether the UE needs to send the session status information to the SN (secondary node), and/or how the UE sends the session status information to the MN (master node) and/or the SN (secondary node). If the UE AS receives the session status information from an upper layer, the UE AS reports the Application Layer Session status information according to the report configuration of Application Layer Session status to the MN (master node) and/or SN (secondary node).

In some embodiments, the report configuration of Application Layer Session status information may be an enumeration type, such as ENUMERATED{MN (master node), SN (secondary node), MN (master node) + SN (secondary node),...} or ENUMERATED{SRB4, SRBx, SRB4+SRBx... }. If the SRB4 (or MN (master node)) is indicated, it means that the session status information is sent to the MN (master node) through the SRB4. If the SRBx (or SN (secondary node)) is indicated, it means that the session status information is reported to the SN (secondary node) through the SRBx. If SRB4+SRBx (or MN (master node)+SN ( Secondary node)) is indicated, it means that the session status information to is sent to the SN (secondary node) through the SRB4 and sent to the MN (master node) through the SRBx, respectively.

In other embodiments, the report configuration of Application layer Session status information may be a series of bits, each bit representing a network node (i.e., MN or SN) to which the UE is connected or a signaling bearer (SRB4 or SRBx). If the bit is indicated as "true", it means that the UE may send the session status information to the node corresponding to the bit, The above is only an example, the specific information form is not limited to this.

The report configuration of Application Layer Session status information is included in an RRC reconfiguration message for transmission.

At step 408, if the UE AS receives the Application Layer session status information from the upper layer, and the report configuration of Application Layer Session status information indicates that the UE needs to send Application Layer session status information to the SN or the UE needs send Application Layer session status information through SRBx, the UE sends the Application Layer session status information to the SN (secondary node) through SRBx.

After receiving the Application Layer session status information, the SN (secondary node) starts or stops MDT measurement based on the Application Layer session status information. In some implementations, stopping the MDT measurement may refer to notifying SN can stop the by notifying an operation administration and maintenance (OAM), and the OAM initiates the stop of the MDT measurement, or the SN can directly stop the MDT measurement.

For example, if started or on-going is indicated in the Application Layer session status information, the SN (secondary node) starts the MDT measurement. If stopped or notstarted is indicated in Application Layer session status information, the SN (secondary node) stops the MDT measurement.

In some embodiments, stopping MDT measurement is initiated by the OAM. That is, the SN (secondary node) forwards the Application Layer session status information to the OAM. If the Application Layer session status information indicates stopped, the OAM sends a message to the SN (secondary node) to stop the MDT measurement. In other embodiments, the SN (secondary node) can directly stop the MDT measurement of the UE, which can ensure that the MDT measurement on the SN (secondary node) is aligned with the QoE measurement on the UE side in the time dimension, which is helpful for assisting in analyzing QoE problems based on MDT or assisting in analyzing MDT problems based on QoE, thereby more accurately locating problems and optimizing the network.

Embodiments of this disclosure support the network to configure different modes for the UE to report the session status to the UE in a dual connectivity (DC) scenario. This not only allows the network to flexibly configure the session status reporting according to different situations, but also allows the UE to directly report the session status to the SN (secondary node), reducing signaling transmission delay, making the alignment of MDT and QoE in the time dimension more accurate, and more conducive to analyzing and locating network problems.

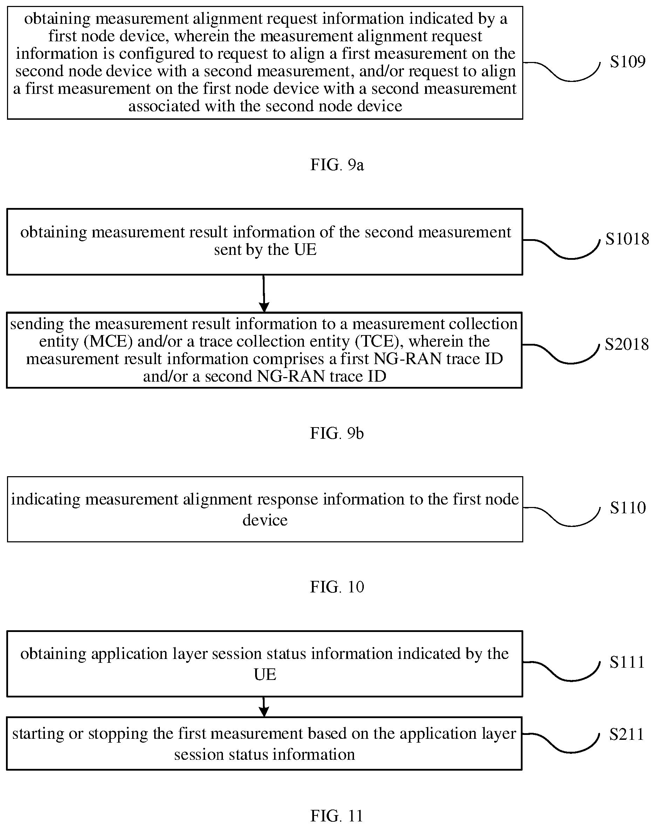

FIG. 9a is a flowchart of another measurement association method provided by an embodiment of the present disclosure, and the method is executed by a second node device. The measurement association method in this embodiment can be applied to node devices.

As shown in FIG. 9a, the method may include but is not limited to the following steps.

At S109, measurement alignment request information indicated by a first node device is obtained, the measurement alignment request information is used to request to align a first measurement on the second node device with a second measurement, and/or request to align a first measurement on the first node device with a second measurement associated with the second node device.

In this embodiment, by receiving the measurement alignment request information indicated by the first node device, in which the measurement alignment request information is used to request to align a first measurement on the second node device with a second measurement, and/or request to align a first measurement on the first node device with a second measurement associated with the second node device, the second node device may be instructed to complete the processing related to the alignment between the first measurement and the second measurement based on the measurement alignment request information.

Embodiments of the present disclosure also provide a measurement association method, in which the measurement alignment request information includes at least one of the following: alignment indication information; and a first NG-RAN trace ID.

The first NG-RAN trace ID (NG-RAN Trace ID) refers to a corresponding NG-RAN Trace ID on the first node device when the UE performs management-based MDT measurement, or a corresponding NG-RAN Trace ID when the UE performs signaling-based MDT measurement

If the measurement alignment request information includes the first NG-RAN trace ID, and the second node device receives a measurement result of the second measurement, the first NG-RAN trace ID is included in the measurement result of the second measurement by the second node device, and sent to an MCE and/or a TCE.

Embodiments of the present disclosure also provide a measurement association method, which can select a UE to perform the first measurement according to the alignment indication information, and/or can start or stop a third measurement on the second node device according to an application layer status reported by the UE.

Embodiments of the present disclosure also provide a measurement association method, which further includes: indicating report configuration information of an application layer session status to the UE based on the measurement alignment request information. The report configuration information is configured to instruct the UE to send session status information to the first node device and/or the second node device, and/or indicate a mode of sending the session status information.

Embodiments of the present disclosure also provide a measurement association method, which is executed by the second node device. FIG. 9b is a flowchart of another measurement association method provided by an embodiment of the present disclosure, and the method is executed by the second node device. The measurement association method in this embodiment can be applied to the second node device.

As shown in FIG. 9b, the method may include but is not limited to the following steps:

At S1018, measurement result information of the second measurement sent by the UE is obtained.

After obtaining the measurement result information of the second measurement sent by the UE, a first NG-RAN trace ID and/or a second NG-RAN trace ID may be included in the measurement result information.

The measurement result information may be used to describe relevant information obtained by the UE through the second measurement process, such as a second measurement report.

The first NG-RAN trace ID is received from the first node device, and the first NG-RAN trace ID is an NG-RAN trace ID of management-based MDT or an NG-RAN trace ID of signaling-based MDT on the first node device of the UE. The second NG-RAN trace ID is an NG-RAN trace ID of management-based MDT on the second node device of the UE.

At S2018, the measurement result information is sent to a measurement collection entity (MCE) and/or a trace collection entity (TCE), the measurement result information includes the first NG-RAN trace ID and/or the second NG-RAN trace ID.

The measurement collection entity (MCE) and the trace collection entity (TCE) can be used to perform association analysis of the first measurement and the second measurement, so as to perform optimization analysis and problem location.

In this embodiment, by receiving the measurement result information of the second measurement sent by the UE, and including the first NG-RAN trace identification and/or the second NG-RAN trace identification in the measurement result information, measurement result information including the NG-RAN trace ID is sent to the MCE and /or the TCE, thus the association accuracy in the measurement association process can be effectively improved based on the first NG-RAN trace ID and/or the second NG-RAN trace ID.

FIG. 10 is a flowchart of another measurement association method provided by an embodiment of the present disclosure, and the method is executed by the second node device. The measurement association method in this embodiment can be applied to node devices.

As shown in FIG. 10, the method may include but is not limited to the following steps:

At S110, measurement alignment response information is indicated to the first node device.

In this embodiment, by indicating the measurement alignment response information to the first node device, the second node device can realize information interaction with the first node device during the measurement association process, thereby effectively improving the measurement association effect.

Embodiments of the present disclosure also provide a measurement association method, in which, the measurement alignment response information includes at least one of the following: a second NG-RAN trace ID; a requirement of application layer session status information; or a report mode of application layer session status information.

Embodiments of the present disclosure also provide a measurement association method, including: receiving a first message sent by a first node device, in which the first message includes the measurement alignment request information. The first message includes at least one of the following: a UE associated signaling message; or a non-UE associated signaling message.

Embodiments of the present disclosure also provide a measurement association method, in which the UE associated signaling message includes at least one of the following: a S-NODE addition request message; an S-NODE modification request message; an S-NODE modification acknowledge message; a UE associated Xn AP message; a UE context establishment request message; a UE context modification request message; a UE context modification acknowledge message; an F1AP message; a bearer context establishment request message; a bearer context modification request message; a bearer context modification acknowledge message; an E1E1AP message; or a first measurement collection request message.

Embodiments of the present disclosure also provide a measurement association method, in which the non-UE associated signaling message includes at least one of the following: an Xn establishment request message; an Xn establishment response message; an NG-RAN node configuration update message; an NG-RAN node configuration update acknowledge message; a non-UE associated XnAP message; an F1 establishment response message; a next generation node base central unit (GNB-CU) configuration update message; a first measurement collection request message; a non-UE associated F1AP message; an E1 establishment request message; a GNB-CU user plane (UP) E1 establishment response message; a GNB-CU-CP configuration update message; or a non-UE associated E1AP message.

Embodiments of the present disclosure also provide a measurement association method, including: sending a second message to the first node device. The second message includes the measurement alignment response information, and the second message includes at least one of the following: a UE associated signaling message; or a non-UE associated signaling message.

Embodiments of the present disclosure also provide a measurement association method, in which the UE associated signaling message includes at least one of the following: an S-NODE addition request acknowledge message; an S-NODE modification acknowledge message; an S-NODE modification requirement; a cell service trace message; a UE associated XnAP message; a UE context establishment feedback message; a UE context modification feedback message; a UE context modification requirement message; a UE associated F1AP message; a bearer context establishment feedback message; a bearer context modification feedback message; a bearer context modification requirement message; or a UE associated E1AP message.

Embodiments of the present disclosure also provide a measurement association method, in which the non-UE associated signaling message includes at least one of the following: an Xn establishment request message; an Xn establishment response message; an NG-RAN node configuration update message; an NG-RAN node configuration update acknowledge message; a non-UE associated XnAP message; an F1 establishment request message; a GNB DU configuration update message; a first measurement collection request message; a non-UE associated F1AP message; an E1 establishment feedback message; a GNB-CU-CP E1 establishment response message; a GNB-CU-UP E1 establishment request message; a GNB-CU-UP configuration update message; or the non-UE associated E1AP message.

Embodiments of the present disclosure also provide a measurement association method, including: sending session status information to the first node device through a first signaling radio bearer SRB; and/or sending session status information to the second node device through a second signaling radio bearer SRB.

FIG. 11 is a flowchart of another measurement association method provided by an embodiment of the present disclosure. The method is executed by the second node device. The measurement association method in this embodiment can be applied to node devices.

As shown in FIG. 11, the method may include but is not limited to the following steps.

At S111, application layer session status information indicated by the UE is obtained.

Obtaining the application layer session status information indicated by the UE may include receiving the application layer session status information indicated by the UE, or any other possible method may be used to obtain the application layer session status information indicated by the UE, which is not limited in herein.

At S211, the first measurement is started or stopped according to the application layer session status information.

In this embodiment, by receiving the application layer session status information indicated by the UE, and starting or stopping the first measurement according to the application layer session status information, the reliability of the execution process of the first measurement can be effectively improved based on the application layer session status information..

Embodiments of the present disclosure also provide a measurement association method, which includes: indicating the application layer session status information of the UE to an OAM, and starting or stopping the first measurement according to indication information of the OAM. Therefore, the execution process of the first measurement can be controlled based on the OAM, so as to effectively improve the control effect of the first measurement process.

Embodiments of the present disclosure also provide a measurement association method, in which the first measurement is MDT measurement, and the second measurement is QoE measurement.

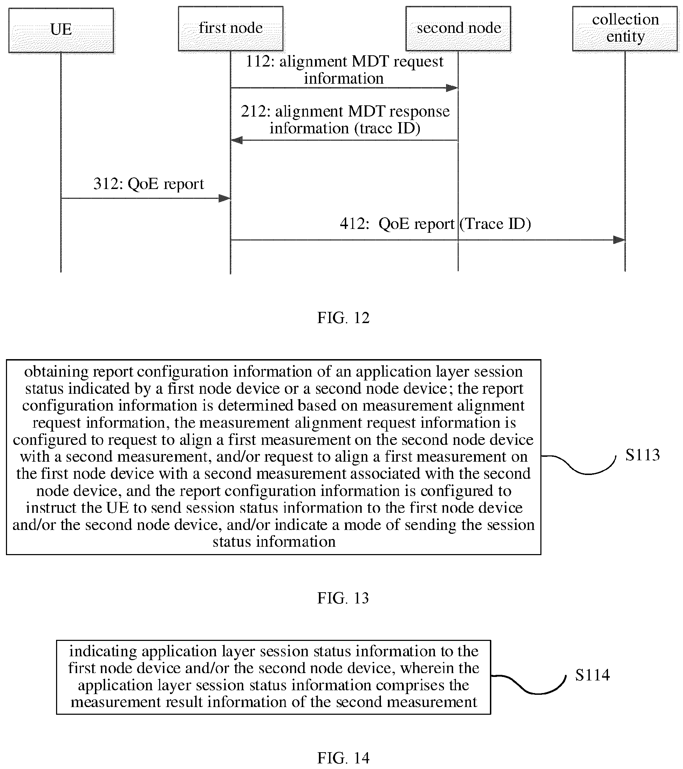

For example, as shown in FIG. 12, FIG. 12 is another schematic diagram of measurement association provided by an embodiment of the present disclosure, in which the execution steps can be illustrated as follows.

At step 112, a first node sends alignment MDT request information to a second node. The alignment MDT request information is used to request MDT measurement on the second node. The requested MDT measurements can be used to analyze QoE and need to be aligned with the QoE measurement. The first node and the second node may be base stations, CU-CPs, CU-UPs or DUs, etc.

In some embodiments, the alignment MDT request information may be transmitted by a UE associated signaling message.

According to an embodiment, the first node is a CU-CP, the second node is a DU, and the alignment MDT request information is included in a UE context establishment request message, a UE context modification request message, a UE context modification acknowledge message or other F1AP message sent by the CU-CP to the DU.

According to another embodiment, the first node is a CU-CP, the second node is a CU-UP, and the alignment MDT request information is included in a bearer context establishment request message, a bearer context modification request message, a bearer context modification acknowledge message or other E1AP message sent by the CU-CP to the CU-UP.

According to yet another embodiment, the first node is a MN (master node) in a DC scenario, the second node is a SN (secondary node) in the DC scenario, and the alignment MDT request information is included in an SN (secondary node) addition request message, an SN (secondary node) modification request message, an SN (secondary node) modification acknowledge message or other XnAP message sent by the MN (master node) to the SN (secondary node).

It should be understood that the above is only an example, and the first node, the second node, and the message including the alignment MDT request information are not limited thereto. The first measurement may be an MDT measurement, but is not limited thereto.

In some embodiments, the alignment MDT request information may be transmitted by a non-UE associated signaling message.

According to an embodiment, the first node is a CU-CP, the second node is a DU, and the alignment MDT request information is included in an F1 SETUP RESPONSE (F1 setup response) message, a GNB-CU CONFIGURATION UPDATE (GNB-CU configuration update) message , a first measurement collection request message or other non-UE associated F1AP message sent by the CU-CP to the DU.

According to another embodiment, the first node is a CU-CP, the second node is a CU-UP, and the alignment MDT request information is included in a GNB-CU-CP E1 SETUP REQUEST (GNB-CU- CP E1 setup request) message, a GNB-CU-UP E1 SETUP RESPONSE (GNB-CU-UP E1 setup response) message, a GNB-CU-CP CONFIGURATION UPDATE (GNB-CU-CP configuration update) message, a first measurement collection request message or other non-UE associated E1AP messages.

According to yet another embodiment, the first node is a MN (master node) in the DC scenario, the second node is a SN (secondary node) in the DC scenario, and the alignment MDT request information is included in an XN SETUP REQUEST message, an XN SETUP RESPONSE message, a NG-RAN NODE CONFIGURATION UPDATE message, a NG-RAN NODE CONFIGURATION UPDATE ACKNOWLEDGE message, a first measurement collection request message or other non-UE associated XnAP message sent by the MN (master node) to the SN (secondary node).

It should be understood that the above is only an example, and the first node, the second node, and the message including the alignment MDT request information are not limited thereto.

The second node receives or considers the information and selects the UE for the MDT measurement.

At step 212, if the second node is configured with management-based MDT and receives the alignment MDT request information in the step 112, the second node sends the alignment MDT response information to the first node. The information may include the following information:

A NG-RAN Trace ID includes trace reference and trace recording session reference, in which the trace recording session reference is generated by the second node.

In some embodiments, the alignment MDT response information may be transmitted by a UE associated signaling messages.

According to an embodiment, the first node is a CU-CP, the second node is a DU, and the alignment MDT response information is included in a UE context establishment feedback message, a UE context modification feedback message, a UE context modification requirement message, a cell service trace message or other UE associated F1AP message sent by the DU to the CU-CP.

According to another embodiment, the first node is a CU-CP, the second node is a CU-UP, and the alignment MDT response information is included in a bearer context establishment feedback message, a bearer context modification feedback message, a bearer context modification requirement message, a cell service trace message or other UE associated E1AP message sent by the CU-UP to the CU-CP.

According to yet another embodiment, the first node is a MN (master node) in the DC scenario, the second node is a SN (secondary node) in the DC scenario, and the alignment MDT response information is included in an SN (secondary node) addition request acknowledge message, an SN (secondary node) modification acknowledge message, an SN (secondary node) modification requirement, a cell service trace message or other UE associated XnAP message sent by the MN (master node) to the SN (secondary node).

It should be understood that the above is only an example, and the first node, the second node, and the message including the alignment MDT response information are not limited thereto.

The first node receives and saves the alignment MDT response information and the NG-RAN trace ID therein.

At step 312, the UE sends a quality of experience report (QoE report) to the first node, and the QoE report is included in the MeasurementReportAppLayer.

At step 412, the one or more NG-RAN trace ID(s) received in step 212 are included in the QoE report by the first node, and then sent to a collection entity, such as an MCE or a TCE.

The MCE queries or retrieves a MDT report at a corresponding time point based on the NG-RAN trace ID(s) in the received QoE report, and performs association analysis on the two reports to analyze QoE problems.

Through the method of the present disclosure, it can be ensured that, under a CU-DU separation architecture or the DC scenario, all sub-nodes or secondary nodes that need to associate QoE measurement can send the trace IDs generated by these sub-nodes or secondary nodes to a node (such as the MN (master node) or the CU- CP) that receives the UE QoE report, so that the trace ID(s) generated by the sub-nodes or secondary nodes are included in the QoE report sent to the MCE by the node receiving the UE QoE report. In this way, the MCE can associate the QoE report with corresponding MDT reports on the sub-nodes or secondary nodes based on these Trace ID(s), for optimization analysis and problem location, thereby better optimizing the network and solving UE problems, improving user experience and loyalty.

FIG. 13 is a flowchart of yet another measurement association method provided by an embodiment of the present disclosure. The method is executed by a UE. The measurement association method in this embodiment can be applied to the UE, such as a mobile phone, a tablet, etc.

As shown in FIG. 13, the method may include but is not limited to the following steps.

At S113, report configuration information of an application layer session status indicated by a first node device or a second node device is obtained, the report configuration information is determined based on measurement alignment request information, the measurement alignment request information is configured to request to align a first measurement on the second node device with a second measurement, and/or request to align a first measurement on the first node device with a second measurement associated with the second node device, and the report configuration information is configured to instruct the UE to send session status information to the first node device and/or the second node device, and/or indicate a mode of sending the session status information

Obtaining the report configuration information of the application layer session status indicated by the first node device or the second node device may, for example, include receiving the report configuration information of the application layer session status indicated by the first node device or the second node device. Or the report configuration information of the application layer session status indicated by the first node device or the second node device may be obtained by any other possible methods, which is not limited herein.

In this embodiment of the present disclosure, by obtaining the report configuration information of the application layer session status indicated by the first node device or the second node device, in which the report configuration information is determined based on the measurement alignment request information, and the measurement alignment request information is used to request to align the first measurement on the second node device with the second measurement, the report configuration information is configured to instruct the UE to send session status information to the first node device and/or the second node device, and/or indicate a mode of sending the session status information, the obtained report configuration information can accurately indicate the session status information sending process corresponding to the UE, and can effectively improve the applicability of the session status information sent by the terminal.

Embodiments of the present disclosure provide a measurement association method, and can also send measurement result information of the second measurement to the first node device and/or the second node device, which is not limited herein.

FIG. 14 is a flowchart of yet another measurement association method provided by an embodiment of the present disclosure. The method is executed by a terminal. The measurement association method in this embodiment can be applied to terminals, such as mobile phones, tablets, etc.

As shown in FIG. 14, the method may include but is not limited to the following steps.

At S114, application layer session status information is indicated to the first node device and/or the second node device, the application layer session status information includes measurement result information of the second measurement.

In this embodiment, the application layer session status information is indicated to the first node device and/or the second node device, and the application layer session status information includes the measurement result information of the second measurement, so as to facilitate the first node device and/or the second node device to perform alignment processing with the first measurement based on the measurement result information of the second measurement, which can provide a reliable reference basis for the measurement association process.

Embodiments of the present disclosure also provide a measurement association method, including: sending the session status information to the first node device through a first signaling radio bearer SRB, and/or sending the session status information to the second node device through a second signaling radio bearer SRB.

Embodiments of the present disclosure also provide a measurement association method, in which the first measurement is a MDT measurement, and the second measurement is a QoE measurement.

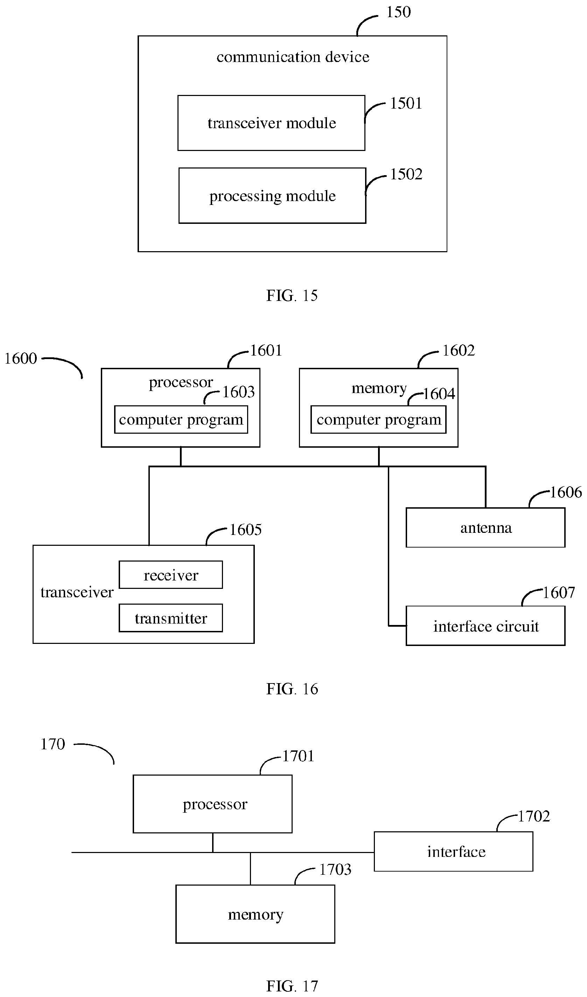

FIG. 15 is a block diagram of a communication device provided by an embodiment of the present disclosure. The communication device 150 shown in FIG. 15 may include a transceiver module 1501 and a processing module 1502. The transceiver module 1501 may include a sending module and/or a receiving module. The sending module is used to implement a sending function, and the receiving module is used to implement a receiving function. The transceiver module 1501 may implement the sending function and/or the receiving function.

The communication device 150 may be a network device (such as the first node device and the second node device in the foregoing method embodiments), may be a device in the network device, or may be a device that can be used in conjunction with the network device. Alternatively, the communication device 150 may be a UE (such as the UE in the foregoing method embodiments), a device in the UE, or a device that can be used in conjunction with the UE.

The communication device 150, on the first node device side, includes:
a transceiver module 1501, configured to measurement alignment request information to a second node device, in which the measurement alignment request information is configured to request to align a first measurement on the second node device with a second measurement, and/or to request to align a first measurement on the first node device with a second measurement associated with the second node device

Optionally, the measurement alignment request information includes at least one of:
alignment indication information; or
a first next generation radio access network (NG-RAN) trace identity (ID).

Optionally, the transceiver module 1501 is further configured to:
obtain measurement alignment response information indicated by the second node device.

Optionally, the measurement alignment response information includes at least one of:
a second NG-RAN trace ID;
a requirement of application layer session status information; or
a report mode of application layer session status information.

Optionally, the transceiver module 1501 is further configured to:
indicate report configuration information of an application layer session status to a user equipment (UE) based on the measurement alignment response information, in which the report configuration information is configured to instruct the UE to send the session status information to the first node device and/or the second node device, and/or indicate a mode of sending the session status information.

Optionally, the transceiver module 1501 is further configured to:
receive measurement result information of the second measurement sent by the UE; and
send the measurement result information to a measurement collection entity (MCE) and/or a trace collection entity (TCE), in which the measurement result information includes the second NG-RAN trace ID.

Optionally, the transceiver module 1501 is further configured to:
send a first message to the second node device, in which the first message includes the measurement alignment request information;
in which the first message includes at least one of:
a UE associated signaling message; or
a non-UE associated signaling message.

Optionally, the UE associated signaling message includes at least one of:
a secondary node (S-NODE) addition request message;
an S-NODE modification request message;
an S-NODE modification acknowledge message;
a UE associated Xn application proposal (XnAP) message;
a UE context establishment request message;
a UE context modification request message;
a UE context modification acknowledge message;
an F1 application proposal (F1AP) message;
a bearer context establishment request message;
a bearer context modification request message;
a bearer context modification acknowledge message;
an E1 application proposal (E1AP) message; or
a first measurement collection request message.

Optionally, the non-UE associated signaling message includes at least one of the following:
an Xn establishment request message;
an Xn establishment response message;
an NG-RAN node configuration update message;
an NG-RAN node configuration update acknowledge message;
a non-UE associated XnAP message;
an F1 establishment response message;
a next generation node base central unit (GNB-CU) configuration update message;
a first measurement collection request message;
a non-UE associated F1AP message;
an E1 establishment request message;
a GNB-CU user plane (UP) E1 establishment response message;
a GNB-CU control plane (CP) E1 establishment request message;
a GNB-CU-CP configuration update message; or
a non-UE associated E1AP message.

Optionally, the transceiver module 1501 is further configured to:
receive a second message sent by the second node device, in which the second message includes the measurement alignment response information;
in which the second message includes at least one of:
   a UE associated signaling message; or
   a non-UE associated signaling message.

Optionally, the UE associated signaling message includes at least one of the following:
an S-NODE addition request acknowledge message;
an S-NODE modification acknowledge message;
an S-NODE modification requirement;
a cell service trace message;
a UE associated XnAP message;
a UE context establishment feedback message;
a UE context modification feedback message;
a UE context modification requirement message;
a UE associated F1AP message;
a bearer context establishment feedback message;
a bearer context modification feedback message;
a bearer context modification requirement message; or
a UE associated E1AP message.

Optionally, the non-UE associated signaling message includes at least one of the following:
an Xn establishment request message;
an Xn establishment response message;
an NG-RAN node configuration update message;
an NG-RAN node configuration update acknowledge message;
a non-UE associated XnAP message;
an F1 establishment request message;
a GNB distributed unit (DU) configuration update message;
a first measurement collection request message;
a non-UE associated F1AP message;
an E1 establishment feedback message;
a GNB-CU-CP E1 establishment response message;
a GNB-CU-UP E1 establishment request message;
a GNB-CU-UP configuration update message; or
the non-UE associated E1AP message.

Optionally, the transceiver module 1501 is further configured to:
send the session status information to the first node device via a first signaling radio bearer (SRB); and/or
send the session status information to the second node device via a second SRB.

Optionally, the transceiver module 1501 is further configured to:
send a third message to the UE, in which the third message includes the report configuration information of the application layer session status.

Optionally, the third message includes at least one of:
a radio resource control (RRC) reconfiguration message;
media access control control element (MAC CE) information; or
downlink control information (DCI).

Optionally, the first measurement is a minimization of drive test (MDT) measurement, and the second measurement is a quality of experience (QoE) measurement.

The communication device 150, on the second node device side, includes:
a transceiver module 1501, configured to obtain measurement alignment request information indicated by a first node device, in which the measurement alignment request information is configured to request to align a first measurement on the second node device with a second measurement, and/or request to align a first measurement on the first node device with a second measurement associated with the second node device.

Optionally, the measurement alignment request information includes at least one of:
alignment indication information; or
a first next generation radio access network (NG-RAN) trace identity (ID).

Optionally, the transceiver module 1501 is further configured to:
indicate report configuration information of an application layer session status to a user equipment (UE) based on the measurement alignment request information, in which the report configuration information is configured to instruct the UE to send session status information to the first node device and/or the second node device, and/or indicate a mode of sending the session status information_{∘}

Optionally, the transceiver module 1501 is further configured to:
indicate measurement alignment response information to the first node device.

Optionally, the measurement alignment response information includes at least one of:
a second NG-RAN trace ID;
a requirement of application layer session status information; or
a report mode of application layer session status information.

Optionally, measurement result information of the second measurement sent by the UE is obtained; and the measurement result information is sent to a measurement collection entity (MCE) and/or a trace collection entity (TCE), in which the measurement result information includes a first NG-RAN trace ID and/or a second NG-RAN trace ID.

Optionally, the transceiver module 1501 is further configured to:
receive a first message sent by the first node device, in which the first message includes the measurement alignment request information;
in which the first message includes at least one of:
a UE associated signaling message; or
a non-UE associated signaling message.

Optionally, the UE associated signaling message includes at least one of the following:
a secondary node (S-NODE) addition request message;
an S-NODE modification request message;
an S-NODE modification acknowledge message;
a UE associated Xn application proposal (AP) message;
a UE context establishment request message;
a UE context modification request message;
a UE context modification acknowledge message;
an F1 application proposal (F1AP) message;
a bearer context establishment request message;
a bearer context modification request message;
a bearer context modification acknowledge message;
an E1 application proposal (E1AP) message; or
a first measurement collection request message.

Optionally, the non-UE associated signaling message includes at least one of the following:
an Xn establishment request message;
an Xn establishment response message;
an NG-RAN node configuration update message;
an NG-RAN node configuration update acknowledge message;
a non-UE associated XnAP message;
an F1 establishment response message;
a next generation node base central unit (GNB-CU) configuration update message;
a first measurement collection request message;
a non-UE associated F1AP message;
an E1 establishment request message;
a GNB-CU user plane (UP) E1 establishment response message;
a GNB-CU-CP configuration update message; or
a non-UE associated E1AP message.

Optionally, the transceiver module 1501 is further configured to:
send a second message to the first node device, in which the second message includes the measurement alignment response information;
in which the second message includes at least one of:
   a UE associated signaling message; or
   a non-UE associated signaling message.

Optionally, the UE associated signaling message includes at least one of the following:
an S-NODE addition request acknowledge message;
an S-NODE modification acknowledge message;
an S-NODE modification requirement;
a cell service trace message;
a UE associated XnAP message;
a UE context establishment feedback message;
a UE context modification feedback message;
a UE context modification requirement message;
a UE associated F1AP message;
a bearer context establishment feedback message;
a bearer context modification feedback message;
a bearer context modification requirement message; or
a UE associated E1AP message.

Optionally, the non-UE associated signaling message includes at least one of the following:
an Xn establishment request message;
an Xn establishment response message;
an NG-RAN node configuration update message;
an NG-RAN node configuration update acknowledge message;
a non-UE associated XnAP message;
an F1 establishment request message;
a GNB distributed unit (DU) configuration update message;
a first measurement collection request message;
a non-UE associated F1AP message;
an E1 establishment feedback message;
a GNB-CU-CP E1 establishment response message;
a GNB-CU-UP E1 establishment request message;
a GNB-CU-UP configuration update message; or
a non-UE associated E1AP message.

Optionally, the transceiver module 1501 is further configured to:
send the session status information to the first node device via a first signaling radio bearer (SRB); and/or
send the session status information to the second node device via a second SRB.

Optionally, the transceiver module 1501 is further configured to obtain application layer session status information indicated by the UE.

Optionally, the communication device 150 further includes a processing module 1502, configured to:
start or stop the first measurement based on the application layer session status information.

Optionally, the transceiver module 1501 is further configured to:
indicate application layer session status information of the UE to an operation administration and maintenance (OAM), and start or stop the first measurement based on indication information of the OAM.

Optionally, the first second measurement is a MDT measurement, and the second measurement is a QoE measurement.

The communication device 150, on the UE side, includes:
a transceiver module 1501, configured to:
obtain report configuration information of an application layer session status indicated by a first node device or a second node device;
in which the report configuration information is determined based on measurement alignment request information, the measurement alignment request information is configured to request to align a first measurement on the second node device with a second measurement, and/or request to align a first measurement on the first node device with a second measurement associated with the second node device, and the report configuration information is configured to instruct the UE to send session status information to the first node device and/or the second node device, and/or indicate a mode of sending the session status information.

Optionally, the transceiver module 1501 is further configured to send measurement result information of the second measurement to the first node device and/or the second node device.

Optionally, the transceiver module 1501 is further configured to:
indicate application layer session status information to the first node device and/or the second node device, in which the application layer session status information includes the measurement result information of the second measurement.

Optionally, the transceiver module 1501 is further configured to:
sending the session status information to the first node device via a first signaling radio bearer (SRB); and/or
sending the session status information to the second node device via a second SRB.

Optionally, the first second measurement is a MDT measurement, and the second measurement is a QoE measurement.

In this embodiment, the measurement alignment request information is indicated to the second node device, the measurement alignment request information is used to request to align the first measurement on the second node device with the second measurement, and/or request to align the first measurement on the first node device with the second measurement associated with the second node device, which can realize the alignment of the first measurement on the second node device with the second measurement on the UE, and realize the alignment of the first measurement on the first node device with the second measurement associated with the second node, thereby effectively improving the association effect between the first measurement and the second measurement.

FIG. 16 is a block diagram of a communication device provided by an embodiment of the present disclosure. The communication device 160 can be a terminal (such as the terminal in the foregoing method embodiments), or a network device (such as the first node device and the second node device in the foregoing method embodiments), or can be a chip, a chip system, or a processor that supports the network device to implement the above methods, or can be a chip, a chip system, or a processor that supports the terminal to implement the above methods. The communication device can be used to implement the methods described in the above method embodiments, details of which may refer to the description in the above method embodiments.

The communication device 160 may include one or more processors 1601. The processor 1601 may be a general-purpose processor or a dedicated processor, such as, a baseband processor or a central processor. The baseband processor may be used for processing communication protocols and communication data. The central processor may be used for controlling the communication device (e.g., a base station, a baseband chip, a terminal, a terminal chip, a distributed unit (DU), or a central unit (CU)), executing a computer program, and processing data of the computer program.

Optionally, the communication device 160 may include one or more memories 1602 on which a computer program 1604 may be stored. The processor 1601 may store a computer program 1603. The processor 1601 executes the computer program 1604 and/or the computer program 1603 to cause the communication device 160 to perform the methods described in the above method embodiments. Optionally, the memory 1602 may also store data. The communication device 160 and the memory 1602 can be provided separately or integrated together.

Optionally, the communication device 160 may also include a transceiver 1605 and an antenna 1606. The transceiver 1605 may be referred to as a transceiver unit, a transceiver machine, or a transceiver circuit, for realizing a transceiver function. The transceiver 1605 may include a receiver and a transmitter. The receiver may be referred to as a receiving machine or a receiving circuit, etc., for realizing the receiving function. The transmitter may be referred to as a transmitter machine or a transmitting circuit, etc., for realizing the transmitting function.

Optionally, the communication device 160 may include one or more interface circuits 1607. The interface circuits 1607 are used to receive code instructions and transmit them to the processor 1601. The processor 1601 runs the code instructions to cause the communication device 160 to perform the method described in the method embodiments.

In an implementation, the processor 1601 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1601 may store a computer program 1603, and the computer program 1603 runs on the processor 1601, causing the communication device 160 to perform the method described in the above method embodiments. The computer program 1603 may be solidified in the processor 1601, in which case the processor 1601 may be implemented by hardware.

In an implementation, the communication device 160 may include circuits. The circuits may implement the sending, receiving or communicating functions in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver can also be produced using various IC process technologies, such as a complementary metal oxide semiconductor (CMOS), n Metal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a terminal (such as the terminal in the foregoing method embodiments) or a network device (such as the first node device and the second node device in the foregoing method embodiments), but the scope of the communication device described in the disclosure is not limited thereto, and the structure of the communication device may not be limited by FIG. 16. The communication device may be a stand-alone device or may be part of a larger device. For example, the communication device may be:
(1) a stand-alone integrated circuit (IC), a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

For a case where the communication device may be a chip or a chip system, FIG. 17 which is structural diagram of the chip may be referred to. The chip shown in FIG. 17 includes a processor 1701 and an interface 1702. There may be one or more processors 1701, and there may be multiple interfaces 1702.

For a case where the chip is used to implement the functions of the network device (the first node device and the second node device) in the embodiments of the present disclosure:
the interface 1702 is used to perform step S102 in FIG. 2, or step S103 in FIG. 3, or step S104 and step S204 in FIG. 4, etc.;
the processor 1701 is used to perform step S211 in FIG. 11, etc..

For a case where the chip is used to implement the functions of the UE in the embodiments of the present disclosure:
the interface 1702 is used to perform step S113 in FIG. 13, or step S114 in FIG. 14, etc.;
Optionally, the chip further includes a memory 1703 used to store necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described functions, but such implementation should not be construed as being beyond the scope of protection of the embodiments of the disclosure.

Embodiments of the present disclosure also provides a communication system, which includes a communication device as a terminal (such as the terminal in the above method embodiments) in the embodiment of FIG. 17 and a communication device as a network device (such as the first node device and the second node device in the above method embodiments), or the system includes the communication device as a network device (such as the first node device and the second node device in the above method embodiments) in the embodiment of FIG. 16 and a communication device as a terminal (such as the terminal in the above method embodiments).

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on a computer, processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs)) or a wireless manner (e.g., using infrared wave, wireless wave, or microwave). The computer-readable storage medium may be any available medium to which the computer is capable to access or a data storage device such as a server, data center that contains one or more available mediums integrated. The available medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art may understand that the first, second, and other various numerical numbers involved in the disclosure are only described for the convenience of differentiation, and are not used to limit the scope of the embodiments of the disclosure, nor to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D", are used to distinguish different technical features of the type, the technical features described using the "first", "second", and "third", and "A", "B", "C" and "D", do not indicate any order of precedence or magnitude.

The correspondence relationships shown in the various tables in the disclosure can be configured or predefined. The values of information in each table are only examples and can be configured to other values, which are not limited by the disclosure. When configuring the correspondence relationships between information and various parameters, it is not necessary to configure all the correspondence relationships shown in each table. For example, in the tables in the disclosure, some correspondence relationships shown in certain rows may not be configured. For another example, appropriate deformation adjustments can be made based on the above table, such as splitting, merging, etc. The names of the parameters shown in the titles of the above tables can also use other names that can be understood by the communication device, and the values or representations of the parameters can be other values or representations that can be understood by the communication device. When implementing the above tables, other data structures can be used, such as arrays, queues, containers, stacks, linear tables, pointers, linked lists, trees, graphs, structures, classes, heaps, hash lists, or hash tables.

The term "predefine" in this disclosure may be understood as define, pre-define, store, pre-store, pre-negotiate, pre-configure, solidify, or pre-fire.

Those skilled in the art may realize that the units and algorithm steps of the various examples described with reference to the embodiments disclosed herein are capable of being implemented in the form of electronic hardware, or a combination of computer software and electronic hardware. Whether these functions are performed in hardware or software depends on the particular application and design constraints of the technical solution. Those skilled in the art may use different methods to implement the described functions for each particular application, but such implementations should not be considered as beyond the scope of the disclosure.

It is clearly understood by those skilled in the art that, for the convenience and brevity of description, the specific working processes of the systems, apparatuses, and units described above can be referred to the corresponding processes in the preceding method embodiments, which is not elaborated herein.

The above are only detailed embodiments of the present disclosure, but the protection scope of the present disclosure is not limited thereto. Any skilled familiar with the technical field can easily think of changes or substitutions within the technical scope disclosed in the present disclosure, which should be covered by the protection scope of this disclosure. Therefore, the protection scope of the present disclosure should be subject to the protection scope of the claims.

## Claims

1. A measurement association method, performed by a first node device, comprising:
indicating measurement alignment request information to a second node device, wherein the measurement alignment request information is configured to request to align a first measurement on the second node device with a second measurement, and/or to request to align a first measurement on the first node device with a second measurement associated with the second node device.

2. The method according to claim 1, wherein the measurement alignment request information comprises at least one of:
alignment indication information; or
a first next generation radio access network (NG-RAN) trace identity (ID).

3. The method according to claim 1 or 2, further comprising:
obtaining measurement alignment response information indicated by the second node device.

4. The method according to claim 3, wherein the measurement alignment response information comprises at least one of:
a second NG-RAN trace ID;
a requirement of application layer session status information; or
a report mode of application layer session status information.

5. The method according to claim 3, further comprising:
indicating report configuration information of an application layer session status to a user equipment (UE) based on the measurement alignment response information, wherein the report configuration information is configured to instruct the UE to send the session status information to the first node device and/or the second node device, and/or indicate a mode of sending the session status information.

6. The method according to claim 4, further comprising:
receiving measurement result information of the second measurement sent by the UE; and
sending the measurement result information to a measurement collection entity (MCE) and/or a trace collection entity (TCE), wherein the measurement result information comprises the second NG-RAN trace ID.

7. The method according to claim 1, wherein indicating the measurement alignment request information to the second node device comprises:
sending a first message to the second node device, wherein the first message comprises the measurement alignment request information;
and wherein the first message is at least one of:
a UE associated signaling message; or
a non-UE associated signaling message.

8. The method according to claim 7, wherein the UE associated signaling message comprises at least one of:
a secondary node (S-NODE) addition request message;
an S-NODE modification request message;
an S-NODE modification acknowledge message;
a UE associated Xn application proposal (XnAP) message;
a UE context establishment request message;
a UE context modification request message;
a UE context modification acknowledge message;
an F1 application proposal (F1AP) message;
a bearer context establishment request message;
a bearer context modification request message;
a bearer context modification acknowledge message;
an E1 application proposal (E1AP) message; or
a first measurement collection request message.

9. The method according to claim 7, wherein the non-UE associated signaling message comprises at least one of the following:
an Xn establishment request message;
an Xn establishment response message;
an NG-RAN node configuration update message;
an NG-RAN node configuration update acknowledge message;
a non-UE associated XnAP message;
an F1 establishment response message;
a next generation node base central unit (GNB-CU) configuration update message;
a first measurement collection request message;
a non-UE associated F1AP message;
an E1 establishment request message;
a GNB-CU user plane (UP) E1 establishment response message;
a GNB-CU control plane (CP) E1 establishment request message;
a GNB-CU-CP configuration update message; or
a non-UE associated E1AP message.

10. The method according to claim 3, wherein obtaining the measurement alignment response information indicated by the second node device comprises:
receiving a second message sent by the second node device, wherein the second message comprises the measurement alignment response information;
wherein the second message comprises at least one of:
a UE associated signaling message; or
a non-UE associated signaling message.

11. The method according to claim 10, wherein the UE associated signaling message comprises at least one of the following:
an S-NODE addition request acknowledge message;
an S-NODE modification acknowledge message;
an S-NODE modification requirement;
a cell service trace message;
a UE associated XnAP message;
a UE context establishment feedback message;
a UE context modification feedback message;
a UE context modification requirement message;
a UE associated F1AP message;
a bearer context establishment feedback message;
a bearer context modification feedback message;
a bearer context modification requirement message; or
a UE associated E1AP message.

12. The method according to claim 10, wherein the non-UE associated signaling message comprises at least one of the following:
an Xn establishment request message;
an Xn establishment response message;
an NG-RAN node configuration update message;
an NG-RAN node configuration update acknowledge message;
a non-UE associated XnAP message;
an F1 establishment request message;
a GNB distributed unit (DU) configuration update message;
a first measurement collection request message;
a non-UE associated F1AP message;
an E1 establishment feedback message;
a GNB-CU-CP E1 establishment response message;
a GNB-CU-UP E1 establishment request message;
a GNB-CU-UP configuration update message; or
the non-UE associated E1AP message.

13. The method according to claim 5, wherein the mode of sending the session status information comprises:
sending the session status information to the first node device via a first signaling radio bearer (SRB); and/or
sending the session status information to the second node device via a second SRB.

14. The method according to claim 5, wherein indicating the report configuration information of the application layer session status to the UE comprises:
sending a third message to the UE, wherein the third message comprises the report configuration information of the application layer session status.

15. The method according to claim 14, wherein the third message comprises at least one of:
a radio resource control (RRC) reconfiguration message;
media access control control element (MAC CE) information; or
downlink control information (DCI).

16. The method according to claim 1, wherein the first measurement is a minimization of drive test (MDT) measurement, and the second measurement is a quality of experience (QoE) measurement.

17. A measurement association method, performed by a second node device, comprising:
obtaining measurement alignment request information indicated by a first node device, wherein the measurement alignment request information is configured to request to align a first measurement on the second node device with a second measurement, and/or request to align a first measurement on the first node device with a second measurement associated with the second node device.

18. The method according to claim 17, wherein the measurement alignment request information comprises at least one of:
alignment indication information; or
a first next generation radio access network (NG-RAN) trace identity (ID).

19. The method according to claim 17, further comprising:
indicating report configuration information of an application layer session status to a user equipment (UE) based on the measurement alignment request information, wherein the report configuration information is configured to instruct the UE to send session status information to the first node device and/or the second node device, and/or indicate a mode of sending the session status information.

20. The method according to claim 17, further comprising:
indicating measurement alignment response information to the first node device.

21. The method according to claim 20, wherein the measurement alignment response information comprises at least one of:
a second NG-RAN trace ID;
a requirement of application layer session status information; or
a report mode of application layer session status information.

22. The method according to claim 19, further comprising:
obtaining measurement result information of the second measurement sent by the UE; and
sending the measurement result information to a measurement collection entity (MCE) and/or a trace collection entity (TCE), wherein the measurement result information comprises a first NG-RAN trace ID and/or a second NG-RAN trace ID.

23. The method according to claim 17, wherein obtaining the measurement alignment request information indicated by the first node device comprises:
receiving a first message sent by the first node device, wherein the first message comprises the measurement alignment request information;
wherein the first message comprises at least one of:
a UE associated signaling message; or
a non-UE associated signaling message.

24. The method according to claim 23, wherein the UE associated signaling message comprises at least one of the following:
a secondary node (S-NODE) addition request message;
an S-NODE modification request message;
an S-NODE modification acknowledge message;
a UE associated Xn application proposal (AP) message;
a UE context establishment request message;
a UE context modification request message;
a UE context modification acknowledge message;
an F1 application proposal (F1AP) message;
a bearer context establishment request message;
a bearer context modification request message;
a bearer context modification acknowledge message;
an E1 application proposal (E1AP) message; or
a first measurement collection request message.

25. The method according to claim 23, wherein the non-UE associated signaling message comprises at least one of the following:
an Xn establishment request message;
an Xn v response message;
an NG-RAN node configuration update message;
an NG-RAN node configuration update acknowledge message;
a non-UE associated XnAP message;
an F1 establishment response message;
a next generation node base central unit (GNB-CU) configuration update message;
a first measurement collection request message;
a non-UE associated F1AP message;
an E1 establishment request message;
a GNB-CU user plane (UP) E1 establishment response message;
a GNB-CU-CP configuration update message; or
a non-UE associated E1AP message.

26. The method according to claim 21, wherein indicating the measurement alignment response information to the first node device comprises:
sending a second message to the first node device, wherein the second message comprises the measurement alignment response information;
wherein the second message comprises at least one of:
a UE associated signaling message; or
a non-UE associated signaling message.

27. The method according to claim 26, wherein the UE associated signaling message comprises at least one of the following:
an S-NODE addition request acknowledge message;
an S-NODE modification acknowledge message;
an S-NODE modification requirement;
a cell service trace message;
a UE associated XnAP message;
a UE context establishment feedback message;
a UE context modification feedback message;
a UE context modification requirement message;
a UE associated F1AP message;
a bearer context establishment feedback message;
a bearer context modification feedback message;
a bearer context modification requirement message; or
a UE associated E1AP message.

28. The method according to claim 26, wherein the non-UE associated signaling message comprises at least one of the following:
an Xn establishment request message;
an Xn establishment response message;
an NG-RAN node configuration update message;
an NG-RAN node configuration update acknowledge message;
a non-UE associated XnAP message;
an F1 establishment request message;
a GNB distributed unit (DU) configuration update message;
a first measurement collection request message;
a non-UE associated F1AP message;
an E1 establishment feedback message;
a GNB-CU-CP E1 establishment response message;
a GNB-CU-UP E1 establishment request message;
a GNB-CU-UP configuration update message; or
a non-UE associated E1AP message.

29. The method according to claim 20, wherein the mode of sending the session status information comprises:
sending the session status information to the first node device via a first signaling radio bearer (SRB); and/or
sending the session status information to the second node device via a second SRB.

30. The method according to claim 19, further comprising:
obtaining application layer session status information indicated by the UE; and
starting or stopping the first measurement based on the application layer session status information.

31. The method according to claim 19, further comprising:
indicating application layer session status information of the UE to an operation administration and maintenance (OAM), and starting or stopping the first measurement based on indication information of the OAM.

32. The method according to claim 17, wherein the first measurement is a minimization of drive test (MDT) measurement, and the second measurement is a quality of experience (QoE) measurement.

33. A measurement association method, performed by a user equipment (UE), comprising:
obtaining report configuration information of an application layer session status indicated by a first node device or a second node device;
wherein the report configuration information is determined based on measurement alignment request information, the measurement alignment request information is configured to request to align a first measurement on the second node device with a second measurement, and/or request to align a first measurement on the first node device with a second measurement associated with the second node device, and the report configuration information is configured to instruct the UE to send session status information to the first node device and/or the second node device, and/or indicate a mode of sending the session status information.

34. The method according to claim 33, further comprising:
sending measurement result information of the second measurement to the first node device and/or the second node device.

35. The method according to claim 33, further comprising:
indicating application layer session status information to the first node device and/or the second node device, wherein the application layer session status information comprises the measurement result information of the second measurement.

36. The method according to claim 33, wherein the mode of sending the session status information comprises:
sending the session status information to the first node device via a first signaling radio bearer (SRB); and/or
sending the session status information to the second node device via a second SRB.

37. The method according to claim 33, wherein the first measurement is a minimization of drive test (MDT) measurement, and the second measurement is a quality of experience (QoE) measurement.

38. A communication system, comprising: a first node device, a second node device, and a user equipment (UE), wherein the first node device performs the method of any one of claims 1-16, the second node device performs the method of any one of claims 17-32, and the UE performs the method of any one of claims 33-37.

39. A communication device, comprising: a processor and a memory, wherein a computer program is stored in the memory, and the processor is configured to execute the computer program stored in the memory to cause the device to perform the method of any one of claims 1-16, the method of any one of claims 17-32, or the method of any one of claims 33-37.

40. A computer-readable storage medium for storing instructions that, when executed, cause the method of any one of claims 1-16 to be performed, or cause the method of any one of claims 17-32 to be performed, or cause the method of any one of claims 33-37 to be performed.
